# EUROPEAN PATENT SPECIFICATION

(11) **EP 4 239 441 B1**
(45) Date of publication and mention of the grant of the patent: **22.04.2026**
(21) Application number: 21900933.9
(22) Date of filing: 26.11.2021
(51) Int. Cl.: G06F 1/16, G09F 9/30, H04M 1/02

(54) **ELECTRONIC DEVICE COMPRISING FLEXIBLE DISPLAY**
ELEKTRONISCHE VORRICHTUNG MIT FLEXIBLER ANZEIGE
DISPOSITIF ÉLECTRONIQUE COMPRENANT UN ÉCRAN SOUPLE

(30) Priority: 02.12.2020 KR 20200166865
(43) Date of publication of application: 06.09.2023
(73) Proprietor: Samsung Electronics Co., Ltd., Suwon-si, Gyeonggi-do 16677 (KR)
(72) Inventor: JIN, Hyuncheol, Suwon-si, Gyeonggi-do 16677 (KR); CHUN, Jaebong, Suwon-si, Gyeonggi-do 16677 (KR); NA, Hyoseok, Suwon-si, Gyeonggi-do 16677 (KR); SON, Dongil, Suwon-si, Gyeonggi-do 16677 (KR); LIM, Gun, Suwon-si, Gyeonggi-do 16677 (KR); CHO, Chihyun, Suwon-si, Gyeonggi-do 16677 (KR)
(74) Representative: HGF
(86) International application number: PCT/KR2021/017628
(87) International publication number: WO 2022/119245

(56) References cited:
- KR-A- 20160 098 677
- KR-A- 20170 143 081
- KR-A- 20200 006 645
- KR-B1- 102 019 509
- US-A1- 2006 007 368
- US-A1- 2016 231 843
- US-B2- 9 625 948

## Description

### [Technical Field]

Embodiments of the disclosure described herein relate to an electronic device including a flexible display.

### [Background Art]

An electronic device may display a screen through a display. The display included in the electronic device may be a flexible display. For example, the flexible display may be disposed in the electronic device in a form in which at least one region is curved, foldable, or rollable. A display region of the display exposed to the outside may be extended or reduced depending on a state of the electronic device.

Document US 2006/007368A1 discloses a display device assembly comprising a flexible display device being rollable around an axis.

Document US 2016/231843A1 discloses a rollable display device including a flexible display module configured to display an image, a roller configured to roll up the flexible display module, and a plurality of support block groups each including a plurality of support blocks on the flexible display module and arranged in a first direction crossing a second direction of a rolling axis of the roller.

### [Disclosure]

### [Technical Problem]

When the display is folded or rolled, the display may overlap in layers, and a front surface and a rear surface of the display may be brought into contact with each other. Since the display overlaps in layers, the display may be scratched, and introduced moisture may not be removed.

Embodiments of the disclosure provide an electronic device having improved durability and/or impact resistance.

Furthermore, embodiments of the disclosure provide an electronic device for preventing a scratch on a display and deterioration in surface quality of the display.

In addition, embodiments of the disclosure provide an electronic device for easily removing moisture.

### [Technical Solution]

An electronic device according to an embodiment includes a flexible display including a first surface that displays an image and a second surface that faces away from the first surface, and a plurality of support members coupled to the display and spaced apart from each other. The plurality of support members include a first support member. The first support member includes a body part that is disposed on the second surface of the display and that extends from one end portion to an opposite end portion of the display, a first side support part that extends from one end of the body part and that is located on a first side surface of the display, a first cover part that extends from the first side support part and that is located on the first surface of the display, a second side support part that extends from an opposite end of the body part and that is located on a second side surface of the display, and a second cover part that extends from the second side support part and that is located on the first surface of the display. The body part, the first side support part, the first cover part, the second side support part, and the second cover part are integrally formed.

An electronic device according to an embodiment includes a housing, a roller member disposed in the housing, a display including a first surface and a second surface that face away from each other, in which in a first state, the display is wound around the roller member and disposed in the housing, and in the second state, the display is unwound from the roller member and withdrawn from the housing, and a plurality of support members coupled to the display. The plurality of support members include a first support member. The first support member includes a body part that is disposed on the second surface of the display and that extends from one end portion to an opposite end portion of the display, a first side support part that extends from one end of the body part and that is located on a first side surface of the display, a first cover part that extends from the first side support part and that is located on the first surface of the display, a second side support part that extends from an opposite end of the body part and that is located on a second side surface of the display, and a second cover part that extends from the second side support part and that is located on the first surface of the display. In the first cover part and/or the second cover part, a central region is thicker than an edge region.

### [ Advantageous Effects]

According to the embodiments, the durability and/or impact resistance of the electronic device may be improved.

Furthermore, according to the embodiments, a scratch on the display of the electronic device may be prevented, and the surface quality of the display may not be deteriorated.

Moreover, according to the embodiments, moisture introduced into the electronic device may be easily removed.

In addition, the disclosure may provide various effects that are directly or indirectly recognized.

### [ Description of Drawings]

FIG. 1 is a view illustrating a state of an electronic device according to an embodiment.
FIG. 2 is a plan view illustrating an electronic device according to an embodiment.
FIG. 3 is a rear view illustrating the electronic device according to an embodiment.
FIG. 4 is a side view illustrating the electronic device according to an embodiment.
FIG. 5 is a sectional view of the electronic device taken along line A-A' of FIG. 2 according to an embodiment.
FIG. 6 is a perspective view illustrating an electronic device according to an embodiment.
FIG. 7 is a sectional view of the electronic device taken along line B-B' of FIG. 6 according to an embodiment.
FIG. 8 is a rear view illustrating an electronic device according to an embodiment.
FIG. 9 is a sectional view of the electronic device taken along line C-C' of FIG. 8 according to an embodiment.
FIG. 10 is a plan view illustrating an electronic device according to an embodiment.
FIG. 11 is a rear view illustrating the electronic device according to an embodiment.
FIG. 12 is a side view illustrating the electronic device according to an embodiment.
FIG. 13 is a sectional view of the electronic device taken along line D-D' of FIG. 10 according to an embodiment.
FIG. 14 is a side view illustrating an electronic device according to an embodiment.
FIG. 15 is a side view illustrating an electronic device according to an embodiment.
FIG. 16 is a side view illustrating an electronic device according to an embodiment.
FIG. 17 is a side view illustrating a state in which a display is wound in an electronic device according to an embodiment.
FIG. 18 is a plan view illustrating the electronic device according to an embodiment.
FIG. 19 is a rear view illustrating the electronic device according to an embodiment.
FIG. 20 is a side view illustrating the electronic device according to an embodiment.
FIG. 21 is a sectional view of the electronic device taken along line E-E' of FIG. 18 according to an embodiment.
FIG. 22 is a side view illustrating an electronic device according to an embodiment.
FIG. 23 is a side view illustrating an electronic device according to an embodiment.
FIG. 24 is a side view illustrating one region in a state in which a display of the electronic device is wound according to an embodiment.
FIG. 25 is a side view illustrating an electronic device according to an embodiment.
FIG. 26 is a side view illustrating one region in a state in which a display of the electronic device is wound according to an embodiment.
FIG. 27 is a block diagram of an electronic device in a network environment according to various embodiments.

With regard to description of the drawings, identical or similar reference numerals may be used to refer to identical or similar components.

### [ Mode for Invention]

Hereinafter, various embodiments of the disclosure will be described with reference to accompanying drawings. Accordingly, those of ordinary skill in the art will recognize that modification, equivalent, and/or alternative on the various embodiments described herein can be variously made without departing from the scope of the disclosure.

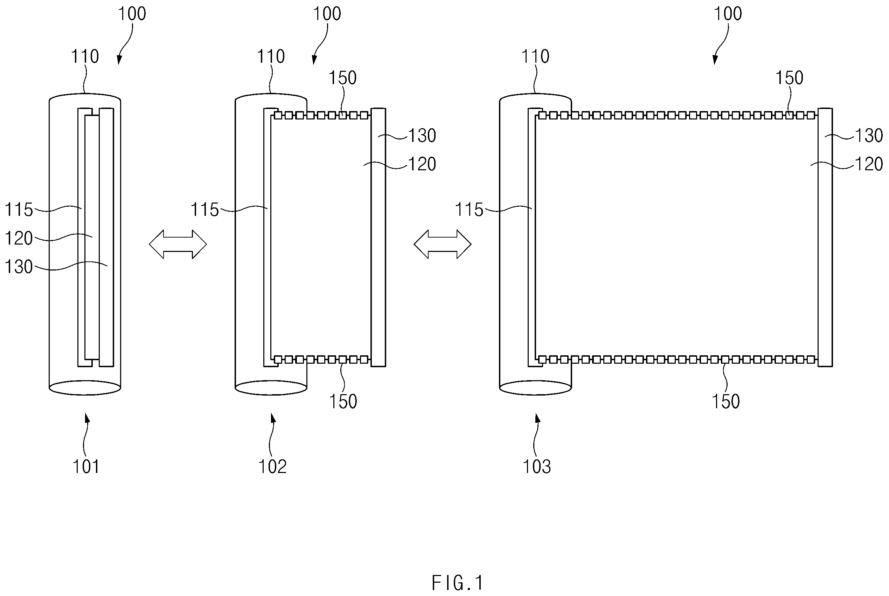

Hereinafter, an electronic device 100 according to an embodiment will be described with reference to FIG. 1. FIG. 1 is a view illustrating states of the electronic device 100 according to an embodiment. The electronic device 100 according to an embodiment may include a housing 110, a display 120, a plurality of support members 150, and a stopper 130.

In an embodiment, the display 120 may be a flexible display that can be folded or rolled. The display 120 may be inserted into or withdrawn from the housing 110 through an entrance/exit opening 115 of the housing 110. The display 120 may be inserted into the housing 110 while being rolled and may be withdrawn from the housing 110 while being unrolled.

In an embodiment, the plurality of support members 150 may be coupled to the display 120 and may support the display 120. The electronic device 100 according to an embodiment may include the plurality of support members 150, and thus the gap between multiple layers of the display 120 rolled in layers in the housing 110 may be maintained at a specified distance.

In an embodiment, the stopper 130 may be connected to an end portion of the display 120. The stopper 130 may not allow the display 120 to be completely rolled into the housing 110. In some embodiments, the stopper 130 may be omitted.

In a first state 101 (e.g., a rolled state or a reduced state) of the electronic device 100 according to an embodiment, the display 120 may be disposed in the housing 110. In the first state 101, the display 120 may be disposed in the housing 110 in a rolled state. In the first state 101, the layers of the display 120 in the rolled state may be spaced apart from each other by a specified distance by the plurality of support members 150.

In a second state 103 (e.g., an unrolled state or an extended state) of the electronic device 103 according to an embodiment, the display 120 may be unrolled and may be withdrawn from the housing 110. The display 120 may be withdrawn from the housing 110 through the entrance/exit opening 115 of the housing 110 and may be located outside the housing 110. The display 120 may display an image through a region exposed outside the housing 110.

In a third state 102 (e.g., an intermediate state) of the electronic device 100 according to an embodiment, a partial region of the display 120 may be withdrawn from the housing 110. The partial region of the display 120 may be withdrawn from the housing 110 through the entrance/exit opening 115 of the housing 110 and may be located outside the housing 110. The remaining region of the display 120 may be disposed in the housing 110 in a rolled state. The display 120 may display an image through the partial region exposed outside the housing 110.

According to an embodiment, the housing 110 may be formed in various shapes. For example, the housing 110 may have a cylindrical shape, a rectangular (or, rod) shape, or a rounded rectangular shape. According to an embodiment, the housing 110 may include a body housing including the entrance/exit opening 115 and side housings including an upper surface and a lower surface of the electronic device. The body housing and the side housings may be integrally formed with each other, or may be formed so as to be separable from each other.

According to an embodiment (not illustrated), at least a portion (e.g., the side housings) of the housing 110 may be transparent and/or translucent. For example, in a state in which the display 120 is rolled a plurality of times within the housing 110 of the electronic device 100, the display 120 may appear in a spirally rolled form through the transparent (or, translucent) side housings.

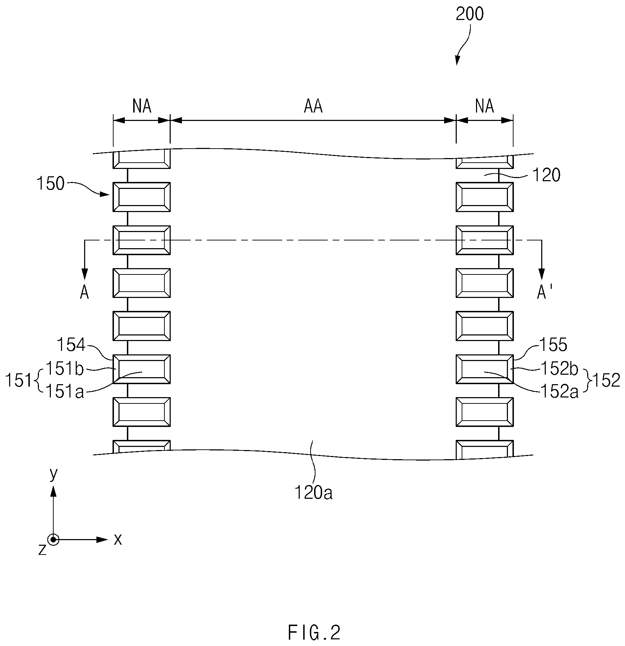

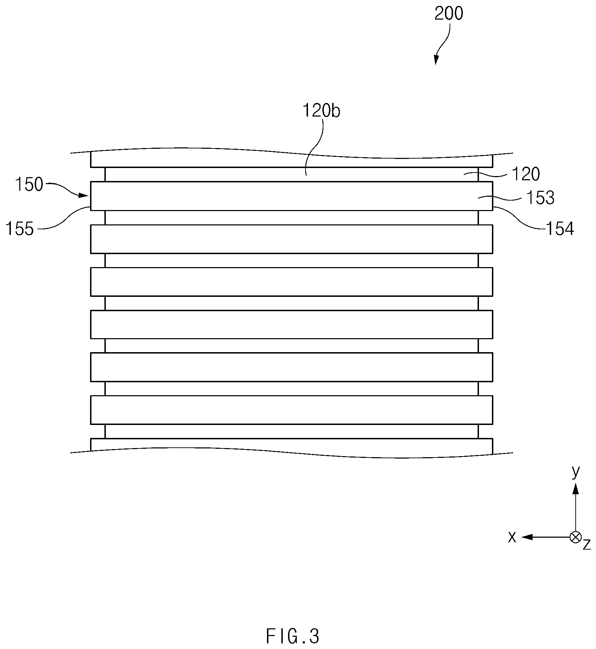

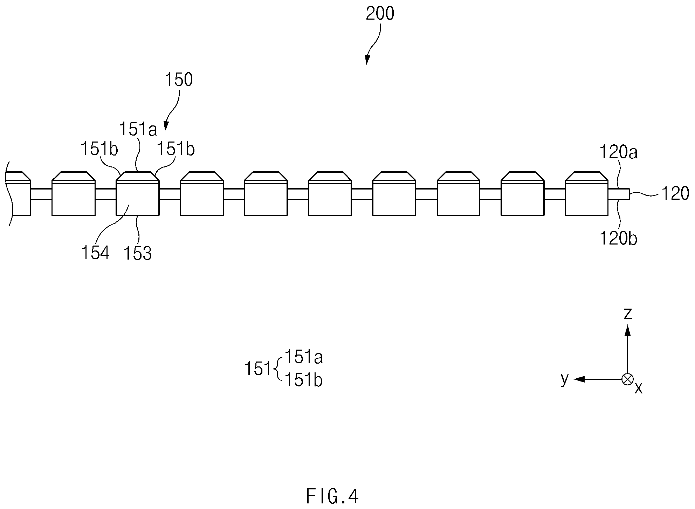

Hereinafter, an electronic device 200 according to an embodiment will be described with reference to FIGS. 2, 3, and 4. FIG. 2 is a plan view illustrating the electronic device 200 according to an embodiment. FIG. 3 is a rear view illustrating the electronic device 200 according to an embodiment. FIG. 4 is a side view illustrating the electronic device 200 according to an embodiment.

The electronic device 200 according to an embodiment may include a display 120 and a plurality of support members 150 coupled to the display 120. The plurality of support members 150 may be arranged in a second direction (e.g., the y-axis direction). The plurality of support members 150 may be spaced apart from each other by a specified gap in the second direction (e.g., the y-axis direction), and the specified gap may be greater than the length (e.g., height) of one support member 150 in the second direction (e.g., the y-axis direction).

In an embodiment, the display 120 may be a flexible display that can be folded or rolled. The display 120 may include a first surface 120a (e.g., a front surface) and a second surface 120b (e.g., a rear surface) facing away from the first surface 120a. The first surface 120a of the display 120 may include a display region, AA, in which a plurality of pixels are disposed and that displays an image and a non-display region, NA, in which lines or drivers for transferring signals for driving the plurality of pixels are located and that does not display an image. The non-display region, NA, may be located on at least a portion of the periphery of the display region, AA. In a first state (e.g., the first state 101 of FIG. 1), the display 120 may be located in a housing (e.g., the housing 110 of FIG. 1) in a rolled state. In a second state (e.g., the second state 103 of FIG. 1), the display 120 may be unrolled and may be at least partially located outside the housing. The display 120 may be inserted into the housing while being rolled and may be withdrawn from the housing while being unrolled. For example, the display 120 may be rolled or unrolled in the second direction (e.g., the y-axis direction).

In an embodiment, the support member 150 may be coupled to the display 120. The support member 150 may include a body part 153, a first fixing part 151 and 154 extending from one end of the body part 153 and fixing one end portion of the display 120, and a second fixing part 152 and 155 extending from an opposite end of the body part 153 and fixing an opposite end portion of the display 120. The support member 150 may include the first fixing part 151 and 154 and the second fixing part 152 and 155 and thus may not be separated from the display 120.

In an embodiment, the body part 153 of the support member 150 may be disposed on the second surface 120b of the display 120. The body part 153 of the support member 150 may extend from the one end portion to the opposite end portion of the display 120. For example, the body part 153 may extend in a first direction (e.g., the x-axis direction) on the second surface 120b of the display 120. The length of the body part 153 in the first direction (e.g., the x-axis direction) is not limited to the illustrated shape. For example, the length of the body part 153 in the first direction (e.g., the x-axis direction) may be substantially the same as the length of the display 120 in the first direction (e.g., the x-axis direction).

In an embodiment, the first fixing part 151 and 154 of the support member 150 may include the first side support part 154 and the first cover part 151 that extend from the one end of the body part 153. The second fixing part 152 and 155 of the support member 150 may include the second side support part 155 and the second cover part 152 that extend from the opposite end of the body part 153.

In an embodiment, the first side support part 154 may extend from the one end of the body part 153 in a third direction (e.g., the z-axis direction) that is the thickness direction of the display 120. The first side support part 154 may be disposed on one side surface (hereinafter, referred to as the "first side surface") of the display 120.

In an embodiment, the first cover part 151 may extend from the first side support part 154 and may be at least partially located on the first surface 120a of the display 120. The first cover part 151 may be located on the non-display region, NA, of the first surface 120a of the display 120 and may be spaced apart from the display region, AA. A central region of the first cover part 151 may have a greater thickness than an edge region of the first cover part 151. For example, an upper surface 151a and 151b of the first cover part 151 may have a gradually increasing height from a periphery of the upper surface 151a and 151b toward a central portion thereof. The upper surface 151a and 151b of the first cover part 151 may include the flat surface 151a located on the central portion of the upper surface 151a and 151b and the inclined surfaces 151b surrounding the flat surface 151a. The flat surface 151a may be a surface substantially parallel to a first direction (e.g., the x-axis direction) and a second direction (e.g., the y-axis direction), and perpendicular to a third direction (e.g., the z-axis direction). The inclined surfaces 151b may be surfaces inclined at a specified angle (e.g., a predetermined angle greater than 0° and less than 90°) with respect to the third direction (e.g., the z-axis direction) that is the thickness direction of the display 120. The inclined surfaces 151b may have a trapezoidal shape having a gradually decreasing width in the third direction (e.g., the z-axis direction). However, the shapes of the inclined surfaces 151b are not limited thereto. For example, the inclined surfaces 151b may include a region having a curvature.

In an embodiment, the second side support part 155 may extend from one end of the body part 153 in the third direction (e.g., the z-axis direction) that is the thickness direction of the display 120. The second side support part 155 may be disposed on one side surface (hereinafter, referred to as the "second side surface") of the display 120 that faces away from the first side surface. The second side support part 155 may be disposed to face the first side support part 154 with the display 120 therebetween.

In an embodiment, the second cover part 152 may extend from the second side support part 155 and may be at least partially located on the first surface 120a of the display 120. The second cover part 152 may be located on the non-display region, NA, of the first surface 120a of the display 120 and may be spaced apart from the display region, AA. A central region of the second cover part 152 may have a greater thickness than an edge region of the second cover part 152. For example, an upper surface 152a and 152b of the second cover part 152 may have a gradually increasing height from a periphery of the upper surface 152a and 152b toward a central portion thereof. The upper surface 152a and 152b of the second cover part 152 may include the flat surface 152a, located on the central portion of the upper surface 152a and 152b, and the inclined surfaces 152b surrounding the flat surface 152a. The flat surface 152a may be a surface substantially parallel to a first direction (e.g., the x-axis direction) and a second direction (e.g., the y-axis direction), and perpendicular to a third direction (e.g., the z-axis direction). The inclined surfaces 152b may be surfaces inclined at a specified angle (e.g., a predetermined angle greater than 0° and less than 90°) with respect to the third direction (e.g., the z-axis direction) that is the thickness direction of the display 120. The inclined surfaces 152b may have a trapezoidal shape having a gradually decreasing width in the third direction (e.g., the z-axis direction). However, the shapes of the inclined surfaces 152b are not limited thereto. For example, the inclined surfaces 152b may include a region having a curvature.

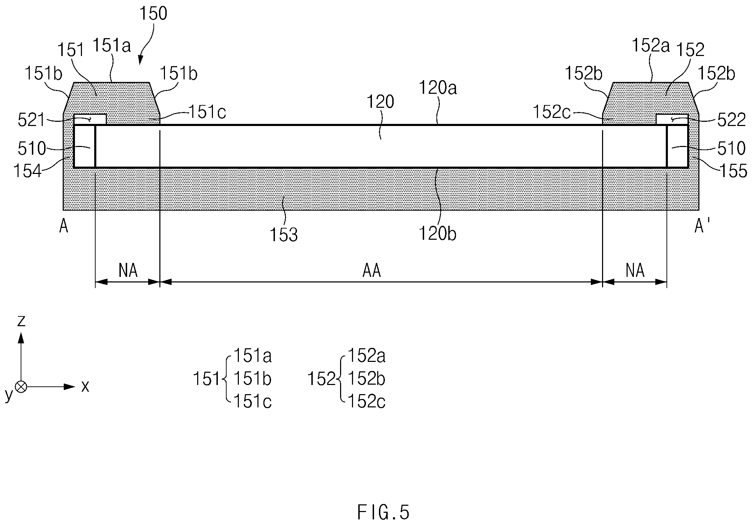

FIG. 5 is a sectional view of the electronic device (e.g., the electronic device 200 of FIG. 2) taken along line A-A' of FIG. 2 according to an embodiment.

Referring to FIG. 5, the electronic device according to an embodiment may include the display 120, the support member 150 coupled to the display 120, and sealing members 510 located on side surfaces of the display 120.

In an embodiment, the display 120 may include the first surface 120a that displays an image and the second surface 120b facing away from the first surface 120a. The display 120 may include the display region, AA, that displays an image and the non-display region, NA, that is adjacent to the display region, AA, and does not display an image. The display 120 may include a polarization layer (not illustrated) for preventing reflection of external light.

In an embodiment, the support member 150 may include the body part 153, the first fixing part 151 and 154 extending from the one end of the body part 153, and the second fixing part 152 and 155 extending from the opposite end of the body part 153. The first fixing part 151 and 154 of the support member 150 may include the first side support part 154 and the first cover part 151 that extend from the one end of the body part 153. The second fixing part 152 and 155 of the support member 150 may include the second side support part 155 and the second cover part 152 that extend from the opposite end of the body part 153.

In an embodiment, the body part 153 of the support member 150 may extend in the first direction (e.g., the x-axis direction) on the second surface 120b of the display 120.

In an embodiment, the first side support part 154 may extend from the one end of the body part 153 in the third direction (e.g., the z-axis direction), which is the thickness direction of the display 120, and may be at least partially located on a side surface of the display 120.

In an embodiment, the first cover part 151 may extend from the first side support part 154 so as to be at least partially located on the first surface 120a of the display 120. The first cover part 151 may be located on the non-display region NA of the first surface 120a of the display 120 and may be spaced apart from the display region AA. The first cover part 151 may include the flat surface 151a located on the central portion of the upper surface thereof, the inclined surfaces 151b surrounding the flat surface 151a, and a protrusion 151c. The flat surface 151a may be flat in a direction substantially perpendicular to the third direction (e.g., the z-axis direction). The inclined surfaces 151b may be surfaces inclined at the specified angle with respect to the third direction (e.g., the z-axis direction) that is the thickness direction of the display 120. The protrusion 151c may protrude in a direction (e.g., the -z-axis direction) in which the display 120 is located. The protrusion 151c may be brought into contact with the first surface 120a of the display 120. The support member 150 may include a groove 521 formed by the first cover part 151, the protrusion 151c, and the first side support part 154.

In an embodiment, the second side support part 155 may extend from the opposite end of the body part 153 in the third direction (e.g., the z-axis direction), which is the thickness direction of the display 120, and may be located on a side surface of the display 120.

In an embodiment, the second cover part 152 may extend from the second side support part 155 so as to be located on the first surface 120a of the display 120. The second cover part 152 may be located on the non-display region, NA, of the first surface 120a of the display 120 and may be spaced apart from the display region, AA. The second cover part 152 may include the flat surface 152a located on the central portion of the upper surface thereof, the inclined surfaces 152b surrounding the flat surface 152a, and a protrusion 152c. The flat surface 152a may be flat in a direction substantially perpendicular to the third direction (e.g., the z-axis direction). The inclined surfaces 152b may be surfaces inclined at the specified angle with respect to the third direction (e.g., the z-axis direction) that is the thickness direction of the display 120. The protrusion 152c may protrude in the direction (e.g., the -z-axis direction) in which the display 120 is located. The protrusion 152c may be brought into contact with the first surface 120a of the display 120. The support member 150 may include a groove 522 formed by the second cover part 152, the protrusion 152c, and the second side support part 155.

In an embodiment, the opposite end portions of the display 120 may be fixed to the support member 150 by the first fixing part 151 and 154 and the second fixing part 152 and 155, respectively. The one end portion of the display 120 may be inserted into a space between the first cover part 151, the first side support part 154, and the body part 153. The opposite end portion of the display 120 may be inserted into a space between the second cover part 152, the second side support part 155, and the body part 153. The first cover part 151 and the second cover part 152 of the support member 150 may include the protrusions 151c and 152c, and thus may prevent the support member 150 coupled to the display 120 from moving in the third direction (e.g., the z-axis direction). The support member 150 may include the protrusions 151c and 152c and the grooves 521 and 522, and thus may minimize a contact area between the display 120 and the support member 150.

In an embodiment, the support member 150 may be coupled to the display 120 so as to be movable relative to the display 120 in the second direction (e.g., the y-axis direction). For example, the support member 150 may not be attached to the display 120. However, the support member 150 according to an embodiment is not limited thereto. For example, the support member 150 may be attached and fixed to the display 120.

In an embodiment, the sealing members 510 may be at least partially located on the side surfaces of the display 120. The sealing members 510 are located between the display 120 and the first side support part 154 and between the display 120 and the second side support part 155. The sealing members 510 may fill spaces between the side surfaces of the display 120 and the support member 150 to protect the side surfaces of the display 120 and prevent the display 120 from moving relative to the support member 150 in the first direction (e.g., the x-axis direction).

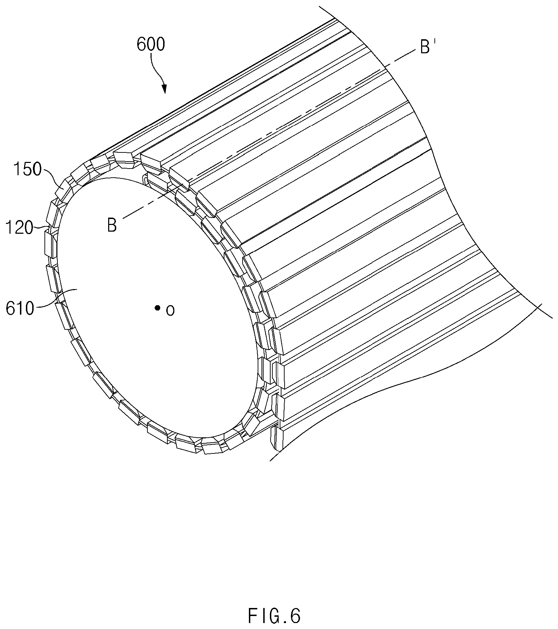

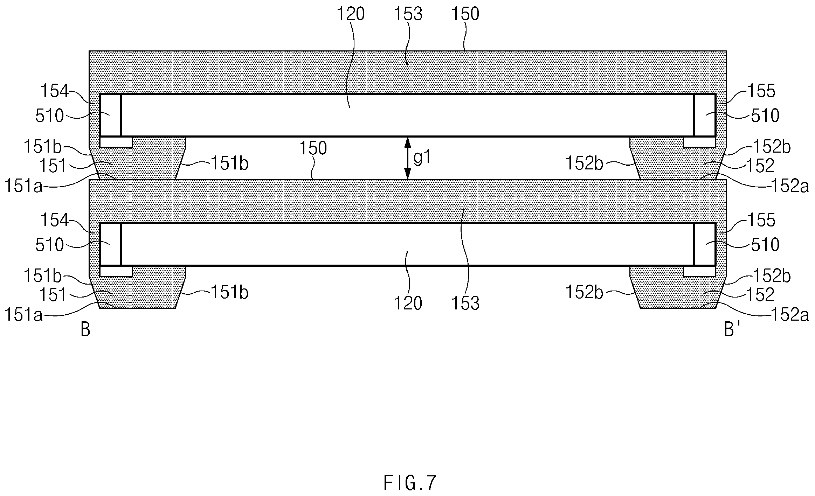

Hereinafter, an electronic device 600 according to an embodiment will be described with reference to FIGS. 6 and 7. FIG. 6 is a perspective view illustrating the electronic device 600 according to an embodiment. FIG. 7 is a sectional view of the electronic device 600 taken along line B-B' of FIG. 6 according to an embodiment.

The electronic device 600 according to an embodiment may include a roller member 610, a display 120 wound around the roller member 610, a plurality of support members 150 coupled to the display 120, and sealing members 510 located on side surfaces of the display 120.

In an embodiment, the roller member 610 may have a cylindrical shape. The display 120 may be wound in layers along an outer perimeter surface of the roller member 610. The display 120 wound around the roller member 610 may overlap in layers.

In an embodiment, the display 120 may be wound around the roller member 610 such that a first cover part 151 and a second cover part 152 of the support member 150 face toward the roller member 610 (or, the center O of the roller member 610). For example, the display 120 may be wound around the roller member 610 such that the first cover part 151 and the second cover part 152 of the support member 150 face toward the inside, and a body part 153 faces toward the outside. In the state in which the display 120 is wound around the roller member 610 (e.g., the first state 101 of FIG. 1), a body part 153 of a support member 150 coupled to one layer of the display 120 may be brought into contact with flat surfaces 151a and 152a of first and second cover parts 151 and 152 of a support member 150 coupled to the next layer of the display 120 wound around the one layer. The first and second cover parts 151 and 152 may include inclined surfaces 151b and 152b, and thus the display 120 may be stably wound or unwound and may be prevented from being stopped.

In an embodiment, the support member 150 coupled to the one layer of the display 120 and the next layer of the display 120 may be spaced apart from each other by a first distance g1. In the electronic device 600 according to an embodiment, the layers of the display 120 that overlap each other as the display 120 is wound around the roller member 610 may be spaced apart from each other by the first distance g1 by the support members 150 coupled to the display 120, and moisture infiltrating the electronic device 600 or moisture generated in the electronic device 600 may be removed. In addition, since the layers of the display 120 do not make direct contact with layers adjacent thereto, the display 120 may be prevented from being scratched, and quality degradation or a defect caused by an external impact may be prevented.

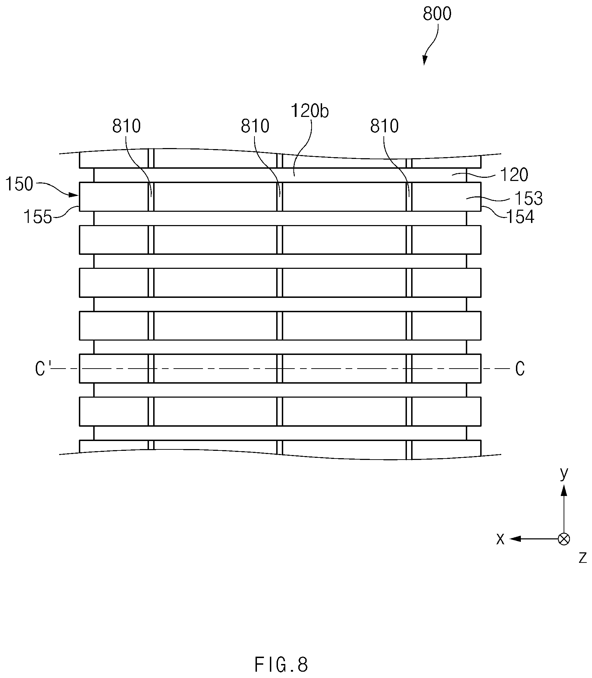

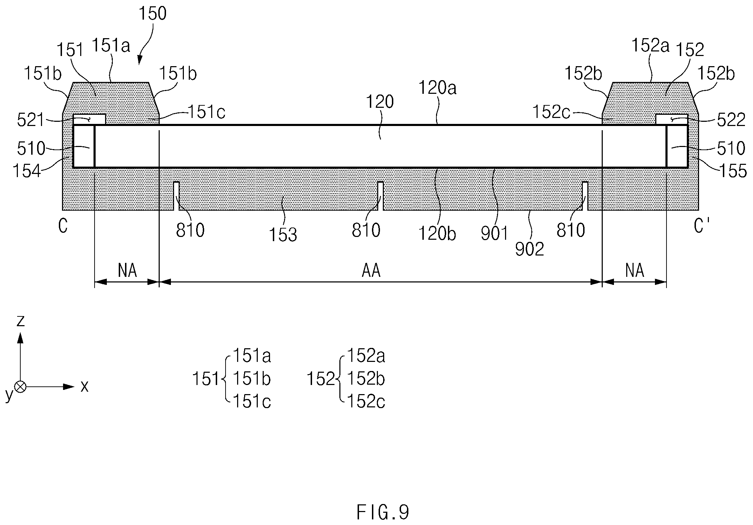

Hereinafter, an electronic device 800 according to an embodiment will be described with reference to FIGS. 8 and 9. FIG. 8 is a rear view illustrating the electronic device according to an embodiment. FIG. 9 is a sectional view of the electronic device taken along line C-C' of FIG. 8 according to an embodiment. A plan view of the electronic device 800 according to an embodiment may be referred to as FIG. 2.

The electronic device 800 according to an embodiment may include a display 120 and a plurality of support members 150 coupled to the display 120.

In an embodiment, the display 120 may include a first surface 120a (e.g., a front surface) and a second surface 120b (e.g., a rear surface) facing away from the first surface 120a. The first surface 120a of the display 120 may include a display region, AA, in which a plurality of pixels are located and that displays an image, and a non-display region, NA, that is located around the display region, AA, and that does not display an image.

In an embodiment, the support member 150 may be coupled to the display 120. The support member 150 may include a body part 153, a first fixing part 151 and 154 extending from one end of the body part 153, and a second fixing part 152 and 155 extending from an opposite end of the body part 153.

In an embodiment, the body part 153 of the support member 150 may be disposed on the second surface 120b of the display 120. The body part 153 of the support member 150 may extend from one end portion to an opposite end portion of the display 120. For example, the body part 153 may extend in the first direction (e.g., the x-axis direction) on the second surface 120b of the display 120. The body part 153 of the support member 150 may include a first surface 901 facing the second surface 120b of the display 120 and making contact with the second surface 120b of the display 120, and a second surface 902 facing away from the first surface 901. The body part 153 of the support member 150 may include at least one groove 810 located on the second surface 902. The groove 810 may extend in the second direction (e.g., the y-axis direction). However, the number and shape of grooves 810 are not limited to those illustrated in FIGS. 8 and 9. In the electronic device 800 according to an embodiment, the body part 153 of the support member 150 may include the at least one groove 810, and thus moisture may be easily removed in a rolled state of the display 120 (e.g., the first state 101 of FIG. 1).

In an embodiment, the first fixing part 151 and 154 of the support member 150 may include the first side support part 154 and the first cover part 151 that extend from the one end of the body part 153. The second fixing part 152 and 155 of the support member 150 may include the second side support part 155 and the second cover part 152 that extend from the opposite end of the body part 153.

In an embodiment, the first side support part 154 may extend from the one end of the body part 153 in the third direction (e.g., the z-axis direction) that is the thickness direction of the display 120. The first side support part 154 may be disposed on a first side surface of the display 120.

In an embodiment, the first cover part 151 may extend from the first side support part 154 and may be located on the first surface 120a of the display 120. The first cover part 151 may be located on the non-display region, NA, of the first surface 120a of the display 120 and may be spaced apart from the display region, AA. A central region of the first cover part 151 may have a greater thickness than an edge region of the first cover part 151. An upper surface 151a and 151b of the first cover part 151 may include the flat surface 151a located on a central portion of the upper surface 151a and 151b and inclined surfaces 151b surrounding the flat surface 151a. The flat surface 151a may be a surface substantially parallel to the first direction (e.g., the x-axis direction) and the second direction (e.g., the y-axis direction) that are perpendicular to the third direction (e.g., the z-axis direction). The inclined surfaces 151b may be surfaces inclined at a specified angle with respect to the third direction (e.g., the z-axis direction) that is the thickness direction of the display 120. The inclined surfaces 151b may have a trapezoidal shape. However, the shapes of the inclined surfaces 151b are not limited thereto. For example, the inclined surfaces 151b may include a region having a curvature.

In an embodiment, the second side support part 155 may extend from one end of the body part 153 in the third direction (e.g., the z-axis direction) that is the thickness direction of the display 120. The second side support part 155 may be disposed on a second side surface of the display 120.

In an embodiment, the second cover part 152 may extend from the second side support part 155 and may be located on the first surface 120a of the display 120. The second cover part 152 may be located on the non-display region, NA, of the first surface 120a of the display 120 and may be spaced apart from the display region, AA. A central region of the second cover part 152 may have a greater thickness than an edge region of the second cover part 152. An upper surface 152a and 152b of the second cover part 152 may include the flat surface 152a located on a central portion of the upper surface 152a and 152b and the inclined surfaces 152b surrounding the flat surface 152a. The flat surface 152a may be a surface substantially parallel to the first direction (e.g., the x-axis direction) and the second direction (e.g., the y-axis direction) that are perpendicular to the third direction (e.g., the z-axis direction). The inclined surfaces 152b may be surfaces inclined at a specified angle with respect to the third direction (e.g., the z-axis direction) that is the thickness direction of the display 120. The inclined surfaces 152b may have a trapezoidal shape. However, the shapes of the inclined surfaces 152b are not limited thereto. For example, the inclined surfaces 152b may include a region having a curvature.

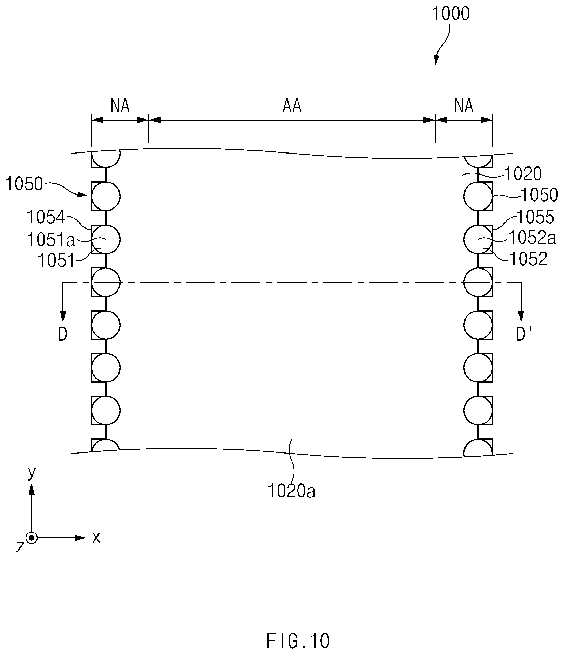

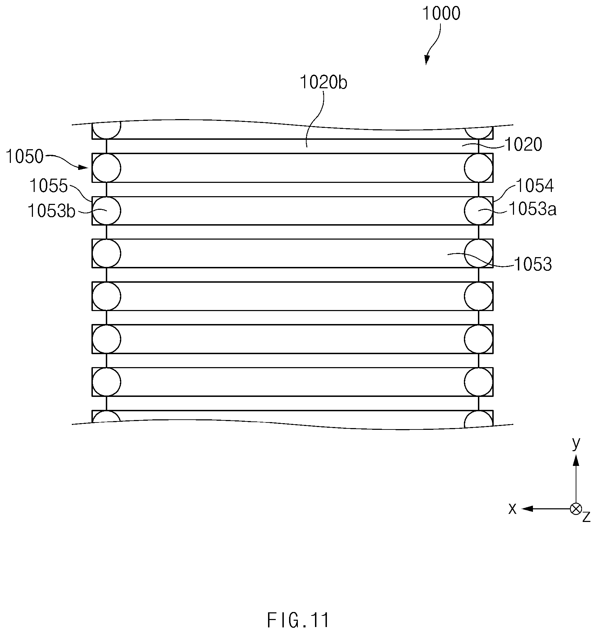

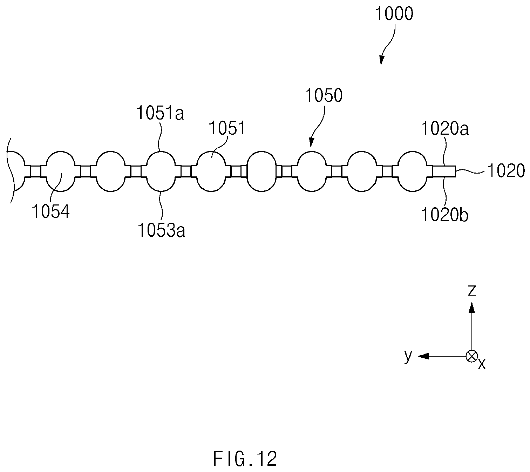

Hereinafter, an electronic device 1000 according to an embodiment will be described with reference to FIGS. 10, 11, and 12. FIG. 10 is a plan view illustrating the electronic device 1000 according to an embodiment. FIG. 11 is a rear view illustrating the electronic device 1000 according to an embodiment. FIG. 12 is a side view illustrating the electronic device 1000 according to an embodiment.

The electronic device 1000 according to an embodiment may include a display 1020 and a plurality of support members 1050 (e.g., the plurality of support members 150 of FIG. 1) coupled to the display 1020.

In an embodiment, the display 1020 may be a flexible display that can be folded or rolled. The display 1020 may include a first surface 1020a (e.g., a front surface) and a second surface 1020b facing away from the first surface 1020a (e.g., a rear surface). The first surface 1020a of the display 1020 may include a display region, AA, that displays an image and a non-display region, NA, that does not display an image.

In an embodiment, the support member 1050 may be coupled to the display 1020. The support member 1050 may include a body part 1053, a first fixing part 1051 and 1054 extending from one end of the body part 1053, and a second fixing part 1052 and 1055 extending from an opposite end of the body part 1053. The first fixing part 1051 and 1054 of the support member 1050 may include the first side support part 1054 and the first cover part 1051 that extend from the one end of the body part 1053. The second fixing part 1052 and 1055 of the support member 1050 may include the second side support part 1055 and the second cover part 1052 that extend from the opposite end of the body part 1053.

In an embodiment, the body part 1053 of the support member 1050 may be disposed on the second surface 1020b of the display 1020. The body part 1053 of the support member 1050 may extend from one end portion to an opposite end portion of the display 1020. For example, the body part 1053 may extend in the first direction (e.g., the x-axis direction) on the second surface 1020b of the display 1020. The body part 1053 may include a first curved region 1053a and a second curved region 1053b. The first curved region 1053a and the second curved region 1053b may be located on opposite end portions of the body part 1053 based on the first direction (e.g., the x-axis direction). The first curved region 1053a may be located at the one end of the body part 1053, and the second curved region 1053b may be located at the opposite end of the body part 1053. The first curved region 1053a of the body part 1053 may be located to overlap a third curved region 1051a of the first cover part 1051 in the third direction (e.g., the z-axis direction). The second curved region 1053b of the body part 1053 may be located to overlap a fourth curved region 1052a of the second cover part 1052 in the third direction (e.g., the z-axis direction). The first curved region 1053a of the body part 1053 may include a hemispherical surface convex in the direction (e.g., the -z-axis direction) opposite to the third direction (e.g., the z-axis direction). The second curved region 1053b of the body part 1053 may include a hemispherical surface convex in the direction (e.g., the -z-axis direction) opposite to the third direction (e.g., the z-axis direction).

In an embodiment, the first side support part 1054 may extend from the one end of the body part 1053 in the third direction (e.g., the z-axis direction) that is the thickness direction of the display 1020. The first side support part 1054 may be disposed on a first side surface of the display 1020.

In an embodiment, the first cover part 1051 may extend from the first side support part 1054 and may be at least partially located on the first surface 1020a of the display 1020. The first cover part 1051 may be located on the non-display region, NA, of the first surface 1020a of the display 1020 and may be spaced apart from the display region, AA. A central region of the first cover part 1051 may have a greater thickness than an edge region of the first cover part 1051. For example, an upper surface of the first cover part 1051 may have a gradually increasing height from a periphery of the upper surface toward a central portion thereof. The first cover part 1051 may include the third curved region 1051a convex in the third direction (e.g., the z-axis direction). For example, the third curved region 1051a of the first cover part 1051 may include a hemispherical surface convex in the third direction (e.g., the z-axis direction).

In an embodiment, the second side support part 1055 may extend from one end of the body part 1053 in the third direction (e.g., the z-axis direction) that is the thickness direction of the display 1020. The second side support part 1055 may be disposed on a second side surface of the display 1020.

In an embodiment, the second cover part 1052 may extend from the second side support part 1055 and may be at least partially located on the first surface 1020a of the display 1020. The second cover part 1052 may be located on the non-display region, NA, of the first surface 1020a of the display 1020 and may be spaced apart from the display region, AA. A central region of the second cover part 1052 may have a greater thickness than an edge region of the second cover part 1052. For example, an upper surface of the second cover part 1052 may have a gradually increasing height from a periphery of the upper surface toward a central portion thereof. The second cover part 1052 may include the fourth curved region 1052a convex in the third direction (e.g., the z-axis direction). For example, the fourth curved region 1052a of the second cover part 1052 may include a hemispherical surface convex in the third direction (e.g., the z-axis direction). The support member 1050 may include the first curved region 1053a, the second curved region 1053b, the third curved region 1051a, and the fourth curved region 1052a, and thus the display 120 may be stably rolled or unrolled.

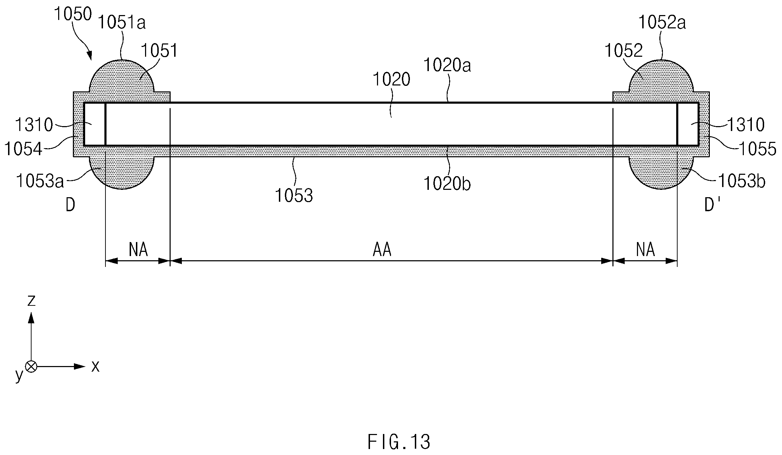

FIG. 13 is a sectional view of the electronic device (e.g., the electronic device 1000 of FIG. 10) taken along line D-D' of FIG. 10 according to an embodiment.

Referring to FIG. 13, the electronic device according to an embodiment may include the display 1020, the support member 1050 coupled to the display 1020, and sealing members 1310 located on side surfaces of the display 1020.

In an embodiment, the display 1020 may include the first surface 1020a that displays an image and the second surface 1020b facing away from the first surface 1020a. The display 1020 may include the display region, AA, that displays an image and the non-display region, NA, that is adjacent to the display region, AA, and does not display an image. The display 1020 may further include a polarization layer (not illustrated) for preventing reflection of external light.

In an embodiment, the support member 1050 may include the body part 1053, the first fixing part 1051 and 1054 extending from the one end of the body part 1053, and the second fixing part 1052 and 1055 extending from the opposite end of the body part 1053. The first fixing part 1051 and 1054 of the support member 1050 may include the first side support part 1054 and the first cover part 1051 that extend from the one end of the body part 1053. The second fixing part 1052 and 1055 of the support member 1050 may include the second side support part 1055 and the second cover part 1052 that extend from the opposite end of the body part 1053.

In an embodiment, the body part 1053 of the support member 1050 may extend in the first direction (e.g., the x-axis direction) on the second surface 1020b of the display 1020. The body part 1053 may include the first curved region 1053a and the second curved region 1053b that are located on the opposite end portions of the body part 1053 and convex in a rear direction (e.g., the -z-axis direction).

In an embodiment, the first side support part 1054 may extend from the one end of the body part 1053 in the third direction (e.g., the z-axis direction) that is the thickness direction of the display 1020.

In an embodiment, the first cover part 1051 may extend from the first side support part 1054 so as to be at least partially located on the first surface 1020a of the display 1020. The first cover part 1051 may be located on the non-display region, NA, of the first surface 1020a of the display 1020 and may be spaced apart from the display region, AA. The first cover part 1051 may include the third curved region 1051a convex in the third direction (e.g., the z-axis direction). The third curved region 1051a of the first cover part 1051 may overlap the first curved region 1053a of the body part 1053 in the third direction (e.g., the z-axis direction).

In an embodiment, the second side support part 1055 may extend from the opposite end of the body part 1053 in the third direction (e.g., the z-axis direction) that is the thickness direction of the display 1020.

In an embodiment, the second cover part 1052 may extend from the second side support part 1055 so as to be at least partially located on the first surface 1020a of the display 1020. The second cover part 1052 may be located on the non-display region, NA, of the first surface 1020a of the display 1020 and may be spaced apart from the display region, AA. The second cover part 1052 may include the fourth curved region 1052a convex in the third direction (e.g., the z-axis direction). The fourth curved region 1052a of the second cover part 1052 may overlap the second curved region 1053b of the body part 1053 in the third direction (e.g., the z-axis direction).

In an embodiment, the opposite end portions of the display 1020 may be fixed to the support member 1050 by the first fixing part 1051 and 1054 and the second fixing part 1052 and 1055, respectively. The one end portion of the display 1020 may be inserted into a space between the first cover part 1051, the first side support part 1054, and the body part 1053. The opposite end portion of the display 1020 may be inserted into a space between the second cover part 1052, the second side support part 1055, and the body part 1053.

In an embodiment, the support member 1050 may be coupled to the display 1020 so as to be movable relative to the display 1020 in the second direction (e.g., the y-axis direction). For example, the support member 1050 may not be attached to the display 1020. However, the support member 1050 according to an embodiment is not limited thereto. For example, the support member 1050 may be attached and fixed to the display 1020.

In an embodiment, the sealing members 1310 may be located on the side surfaces of the display 1020. The sealing members 1310 may be located between the display 1020 and the first side support part 1054 and between the display 1020 and the second side support part 1055. The sealing members 1310 may fill spaces between the side surfaces of the display 1020 and the support member 1050 to protect the side surfaces of the display 1020 and prevent the display 1020 from moving relative to the support member 150 in the first direction (e.g., the x-axis direction).

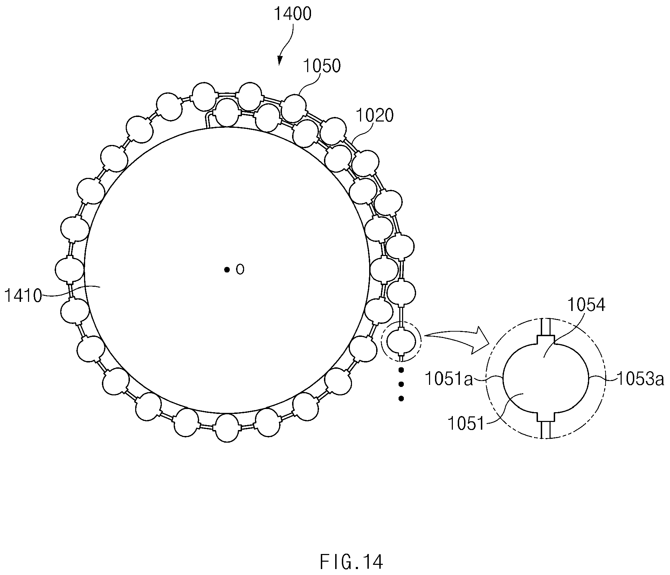

Hereinafter, an electronic device 1400 according to an embodiment will be described with reference to FIG. 14. FIG. 14 is a side view illustrating the electronic device 1400 according to an embodiment.

Referring to FIG. 14, the electronic device 1400 according to an embodiment may include a roller member 1410, a display 1020 wound around the roller member 1410, and a plurality of support members 1050 coupled to the display 1020.

In an embodiment, the roller member 1410 may have a cylindrical shape. The display 1020 may be wound in layers along an outer perimeter surface of the roller member 1410. The display 1020 wound around the roller member 1410 may overlap in layers.

In an embodiment, the display 1020 may be wound around the roller member 1410 such that a first cover part 1051 and a second cover part 1052 (refer to FIG. 13) of the support member 1050 face toward the center O of the roller member 1410. For example, the display 1020 may be wound around the roller member 1410 such that the first cover part 1051 and the second cover part 1052 of the support member 1050 face toward the inside, and a body part 1053 (refer to FIG. 13) faces toward the outside. In the state in which the display 1020 is wound around the roller member 1410 (e.g., the first state 101 of FIG. 1), a first curved region 1053a of the support member 1050 coupled to one layer of the display 1020 may be brought into contact with at least a portion of a third curved region 1051a of the support member 1050 coupled to the next layer of the display 1020 wound around the one layer. Likewise, in the state in which the display 1020 is wound around the roller member 1410 (e.g., the first state 101 of FIG. 1), a second curved region (1053b of FIG. 13) of the support member 1050 coupled to one layer of the display 1020 may be brought into contact with at least a portion of a fourth curved region (1052a of FIG. 13) of the support member 1050 coupled to the next layer of the display 1020.

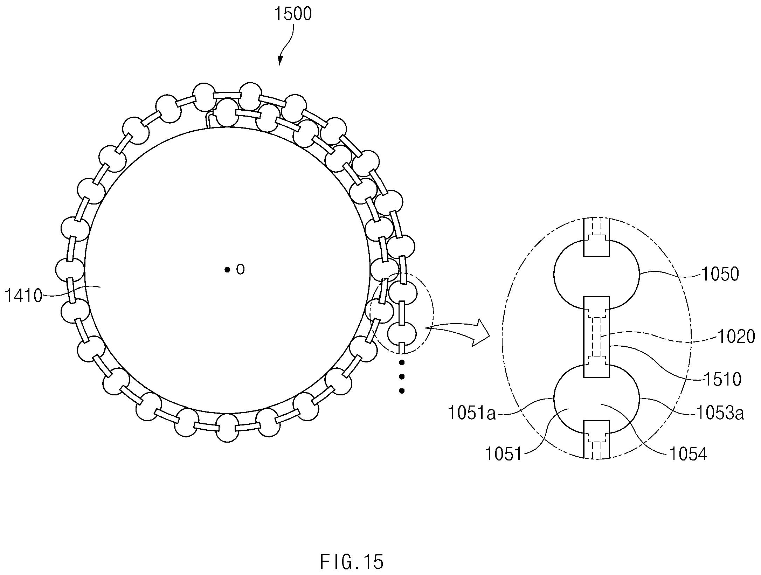

Hereinafter, an electronic device 1500 according to an embodiment will be described with reference to FIG. 15. FIG. 15 is a side view illustrating the electronic device 1500 according to an embodiment.

Referring to FIG. 15, the electronic device 1500 according to an embodiment may include a roller member 1410, a display 1020 wound around the roller member 1410, a plurality of support members 1050 coupled to the display 1020, and connecting members 1510 connecting the plurality of support members 1050.

In an embodiment, the roller member 1410 may have a cylindrical shape. The display 1020 may be wound in layers along an outer perimeter surface of the roller member 1410. The display 1020 wound around the roller member 1410 may overlap in layers.

In an embodiment, the display 1020 may be wound around the roller member 1410 such that a first cover part 1051 and a second cover part 1052 (refer to FIG. 13) of the support member 1050 face toward the center O of the roller member 1410. For example, the display 1020 may be wound around the roller member 1410 such that the first cover part 1051 and the second cover part 1052 of the support member 1050 face toward the inside, and a body part 1053 (refer to FIG. 13) faces toward the outside. In the state in which the display 1020 is wound around the roller member 1410 (e.g., the first state 101 of FIG. 1), a first curved region 1053a of the support member 1050 coupled to one layer of the display 1020 may be brought into contact with at least a portion of a third curved region 1051a of the support member 1050 coupled to the next layer of the display 1020 wound around the one layer. Likewise, in the state in which the display 1020 is wound around the roller member 1410 (e.g., the first state 101 of FIG. 1), a second curved region (1053b of FIG. 13) of the support member 1050 coupled to one layer of the display 1020 may be brought into contact with at least a portion of a fourth curved region (1052a of FIG. 13) of the support member 1050 coupled to the next layer of the display 1020 wound around the one layer.

In an embodiment, the connecting member 1510 may connect two support members 1050 adjacent to each other. Each of the plurality of support members 1050 may be connected with support members 1050 adjacent to opposite sides thereof by the connecting members 1510. One end of the connecting member 1510 may be connected with one support member 1050, and an opposite end of the connecting member 1050 may be connected with the other support member 1050 adjacent thereto. The electronic device 1500 according to an embodiment may include the connecting members 1510 connecting the support members 1050, and thus the distance between the support members 1050 may be maintained at a specified interval.

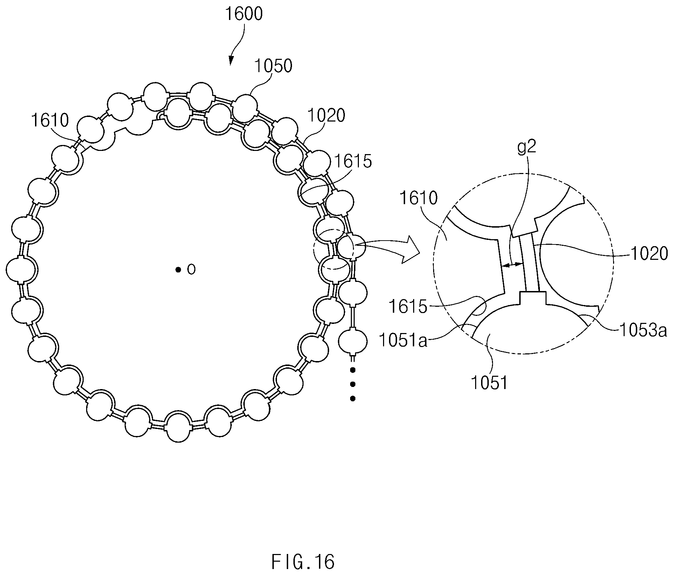

Hereinafter, an electronic device 1600 according to an embodiment will be described with reference to FIG. 16. FIG. 16 is a side view illustrating the electronic device 1600 according to an embodiment.

Referring to FIG. 16, the electronic device 1600 according to an embodiment may include a roller member 1610, a display 1020 wound around the roller member 1610, and a plurality of support members 1050 coupled to the display 1020.

In an embodiment, the roller member 1610 may include a plurality of receiving grooves 1615. For example, the roller member 1610 may have a sawtooth shape. The display 1020 may be wound in layers along an outer perimeter surface of the roller member 1610. The display 1020 wound around the roller member 1610 may overlap in layers.

In an embodiment, the display 1020 may be wound around the roller member 1610 such that a first cover part 1051 and a second cover part 1052 (refer to FIG. 13) of the support member 1050 face toward the center O of the roller member 1610. For example, the display 1020 may be wound around the roller member 1610 such that the first cover part 1051 and the second cover part 1052 of the support member 1050 face toward the inside, and a body part 1053 (refer to FIG. 13) faces toward the outside. In the state in which the display 1020 is wound around the roller member 1610 (e.g., the first state 101 of FIG. 1), a first curved region 1053a of the support member 1050 coupled to one layer of the display 1020 may be brought into contact with at least a portion of a third curved region 1051a of the support member 1050 coupled to the next layer of the display 1020 wound around the one layer. Likewise, in the state in which the display 1020 is wound around the roller member 1610 (e.g., the first state 101 of FIG. 1), a second curved region (1053b of FIG. 13) of the support member 1050 coupled to one layer of the display 1020 may be brought into contact with at least a portion of a fourth curved region (1052a of FIG. 13) of the support member 1050 coupled to the next layer of the display 1020 wound around the one layer.

In an embodiment, in the state in which the display 1020 is wound around the roller member 1610 (e.g., the first state 101 of FIG. 1), the support members 1050 coupled to a region of the display 1020 directly wound around the roller member 1610 may be accommodated in the receiving grooves 1615 of the roller member 1610. In the state in which the display 1020 is wound around the roller member 1610 (e.g., the first state 101 of FIG. 1), support members 1050 coupled to a region of the innermost first layer of the display 1020 may be accommodated in the receiving grooves 1615 of the roller member 1610. For example, in the state in which the display 1020 is wound around the roller member 1610 (e.g., the first state 101 of FIG. 1), the third curved region 1051a (or, the fourth curved region 1052a) of the support member 1050 may be at least partially accommodated in the receiving groove 1615 of the roller member 1610. In the electronic device 1600 according to an embodiment, the roller member 1610 may include the receiving grooves 1615 in which the support members 1050 coupled to the display 1020 are seated, and thus the display 1020 may be stably wound around the roller member 1610.

In an embodiment, the innermost first layer of the display 1020 may be spaced apart from the roller member 1610 by a second distance g2 by the support member 1050 coupled to the display 1020. Accordingly, moisture inside the electronic device 1600 may be removed. In addition, since the display 1020 does not make direct contact with the roller member 1610, the display 1020 may be prevented from being scratched, and quality degradation or a defect caused by an external impact may be prevented.

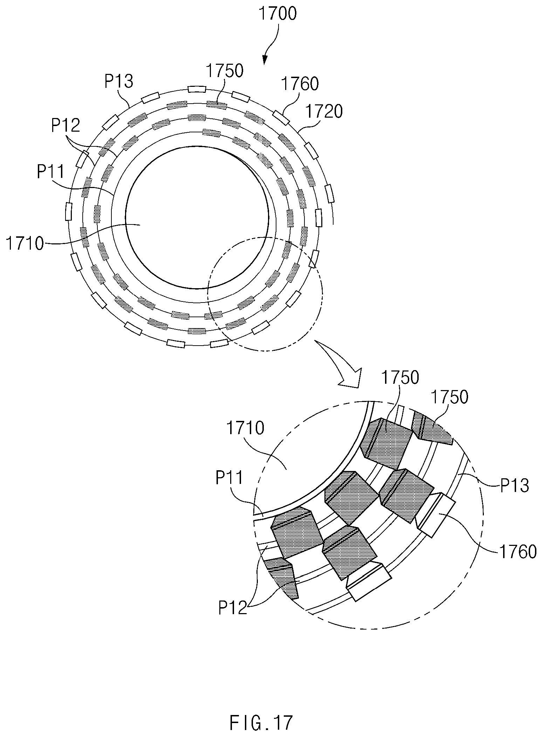

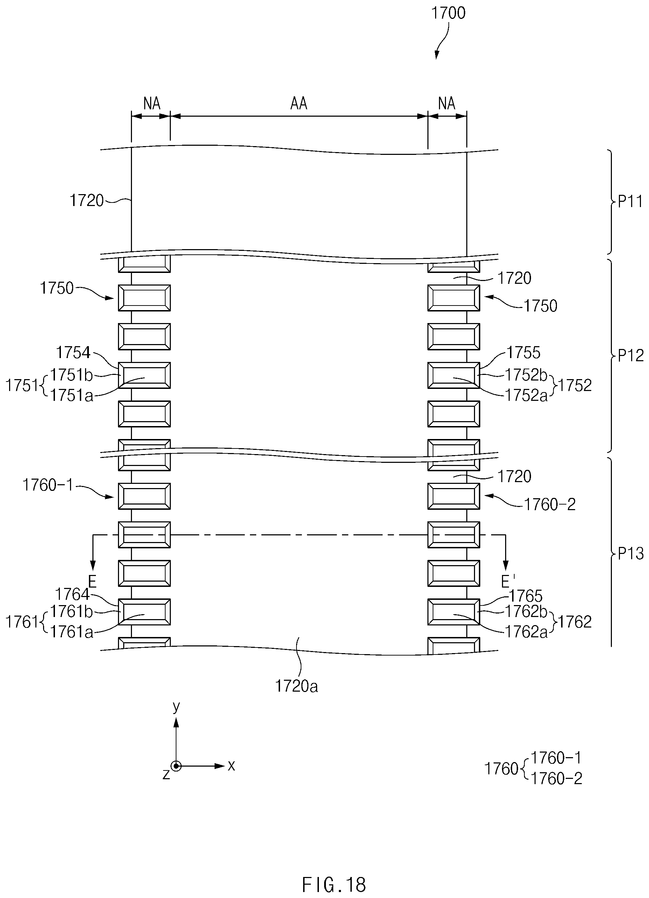

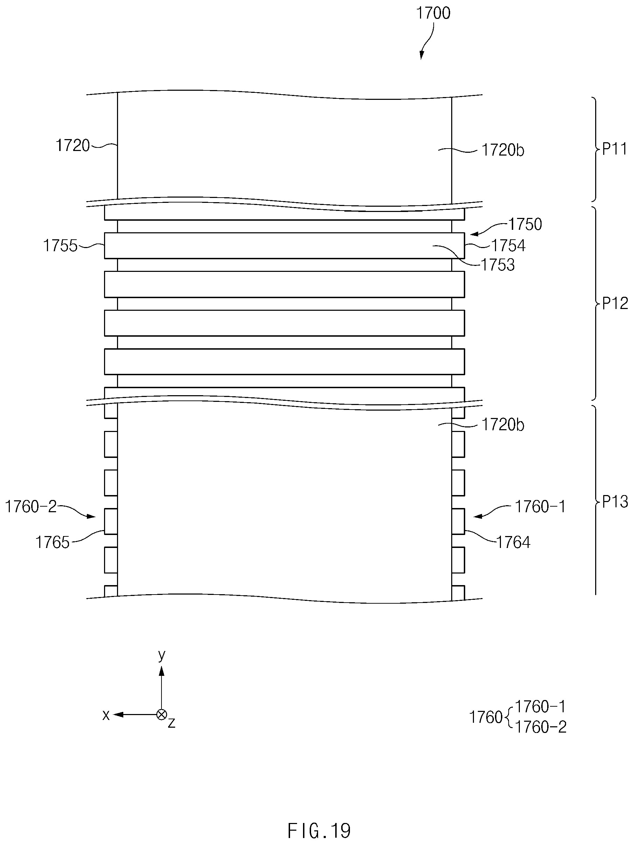

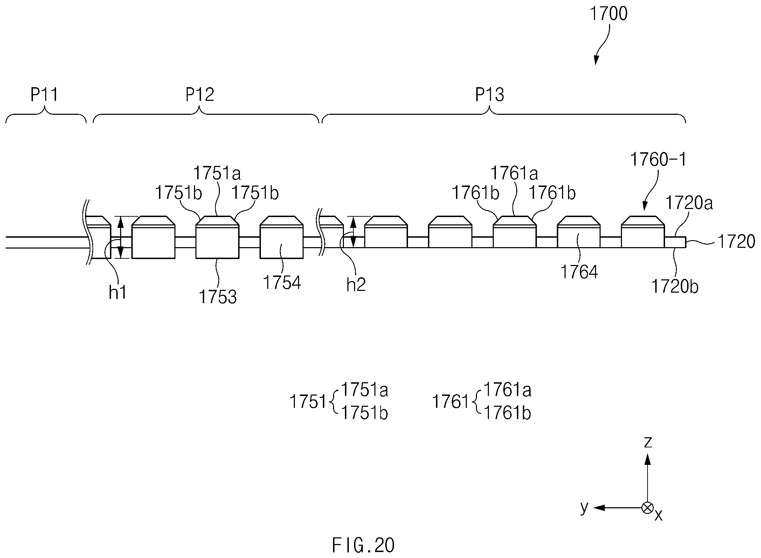

Hereinafter, an electronic device 1700 according to an embodiment will be described with reference to FIGS. 17, 18, 19, and 20. FIG. 17 is a side view illustrating a state in which a display 1720 is wound in the electronic device 1700 according to an embodiment. FIG. 18 is a plan view illustrating the electronic device 1700 according to an embodiment. FIG. 19 is a rear view illustrating the electronic device 1700 according to an embodiment. FIG. 20 is a side view illustrating the electronic device 1700 according to an embodiment.

The electronic device 1700 according to an embodiment may include a roller member 1710, the display 1720, a plurality of support members 1750, and a plurality of partial support members 1760.

In an embodiment, the display 1720 may include a first surface 1720a that displays an image and a second surface 1720b facing away from the first surface 1720a. The display 1720 may be wound in layers along an outer perimeter surface of the roller member 1710. The display 1720 wound around the roller member 1710 may overlap in layers.

In an embodiment, the display 1720 may include an innermost layer region P11 corresponding to a region disposed in a first layer located at the innermost position in the state in which the display 1720 is wound around the roller member 1710 (e.g., the first state 101 of FIG. 1), an outermost layer region P13 corresponding to a region disposed in the outermost layer, and an intermediate layer region P12 corresponding to a region between the innermost layer region P11 and the outermost layer region P13. A support member may not be coupled to the innermost layer region P11 of the display 1720. In the state in which the display 1720 is wound around the roller member 1710 (e.g., the first state 101 of FIG. 1), one surface of the innermost layer region P11 of the display 1720 may be brought into contact with the roller member 1710.

In an embodiment, the plurality of support members 1750 may be coupled to the intermediate layer region P12 of the display 1720. The support member 1750 may be located on a first surface 1720, a second surface 1720b, and side surfaces of the display 1720. The support member 1750 may include a body part 1753 (e.g., the body part 153 of FIG. 5 or the body part 1053 of FIG. 13) located on the second surface 1720b of the display 1720, side support parts 1754 and 1755 (e.g., the side support parts 154 and 155 of FIG. 5 or the side support parts 1054 and 1055 of FIG. 13) located on the side surfaces of the display 1720, and cover parts 1751 and 1752 (e.g., the cover parts 151 and 152 of FIG. 5 or the cover parts 1051 and 1052 of FIG. 13) located on the first surface 1720a of the display 1720. The support member 1750 may include the first side support part 1754 extending from one end of the body part 1753, the first cover part 1751 extending from the first side support part 1754, the second side support part 1755 extending from an opposite end of the body part 1753, and the second cover part 1752 extending from the second side support part 1755.

In an embodiment, the first cover part 1751 may extend from the first side support part 1754 and may be at least partially located on the first surface 1720a of the display 1720. The first cover part 1751 may be located on a non-display region, NA, of the first surface 1720a of the display 1720 and may be spaced apart from a display region, AA. A central region of the first cover part 1751 may have a greater thickness than an edge region of the first cover part 1751. An upper surface 1751a and 1751b of the first cover part 1751 may include the flat surface 1751a located on a central portion of the upper surface 1751a and 1751b and the inclined surfaces 1751b surrounding the flat surface 1751a. The flat surface 1751a may be a surface substantially parallel to the first direction (e.g., the x-axis direction) and the second direction (e.g., the y-axis direction) that are perpendicular to the third direction (e.g., the z-axis direction). The inclined surfaces 1752b may be surfaces inclined at a specified angle with respect to the third direction (e.g., the z-axis direction) that is the thickness direction of the display 1720.

In an embodiment, the second cover part 1752 may extend from the second side support part 1755 and may be at least partially located on the first surface 1720a of the display 1720. The second cover part 1752 may be located on the non-display region, NA, of the first surface 1720a of the display 1720 and may be spaced apart from the display region, AA. A central region of the second cover part 1752 may have a greater thickness than an edge region of the second cover part 1752. An upper surface 1752a and 1752b of the second cover part 1752 may include the flat surface 1752a located on a central portion of the upper surface 1752a and 1752b and the inclined surfaces 1752b surrounding the flat surface 1752a. The flat surface 1752a may be a surface substantially parallel to the first direction (e.g., the x-axis direction) and the second direction (e.g., the y-axis direction) that are perpendicular to the third direction (e.g., the z-axis direction). The inclined surfaces 1752b may be surfaces inclined at a specified angle with respect to the third direction (e.g., the z-axis direction) that is the thickness direction of the display 1720.

In an embodiment, the plurality of partial support members 1760 may be coupled to the outermost layer region P 13 of the display 1720. The plurality of partial support members 1760 may be located on the first surface 1720a and the side surfaces of the display 1720. The plurality of partial support members 1760 may be spaced apart from the second surface 1720b of the display 1720. The plurality of partial support members 1760 may include first partial support members 1760-1 located on one end portion of the display 1720 and second partial support members 1760-2 located on an opposite end portion of the display 1720. The plurality of partial support members 1760 may not include a body part, and thus the first partial support member 1760-1 and the second partial support member 1760-2 facing each other may be spaced apart from each other.

In an embodiment, the partial support member 1760 may include cover parts 1761 and 1762 located on the first surface 1720a of the display 1720 and side support parts 1764 and 1765 that extend from the cover parts 1761 and 1762 in the third direction (e.g., the z-axis direction) and that are located on the side surfaces of the display 1720. The second surface 1720b of the display 1720 may be spaced apart from the partial support member 1760. The first partial support member 1760-1 may include the third cover part 1761 located on the first surface 1720a of the display 1720 and the third side support part 1764 extending from the third cover part 1761. The second partial support member 1760-2 may include the fourth cover part 1762 located on the first surface 1720a of the display 1720 and the fourth side support part 1765 extending from the fourth cover part 1762.

In an embodiment, the third cover part 1761 may be at least partially located on one edge region of the first surface 1720a in the outermost layer region P 13 of the display 1720. The third cover part 1761 may be located on the non-display region, NA, of the first surface 1720a of the display 1720 and may be spaced apart from the display region, AA. A central region of the third cover part 1761 may have a greater thickness than an edge region of the third cover part 1761. An upper surface 1761a and 1761b of the third cover part 1761 may include the flat surface 1761a located on a central portion of the upper surface 1761a and 1761b and the inclined surfaces 1761b surrounding the flat surface 1761a. The flat surface 1761a may be a surface substantially parallel to the first direction (e.g., the x-axis direction) and the second direction (e.g., the y-axis direction) that are perpendicular to the third direction (e.g., the z-axis direction). The inclined surfaces 1761b may be surfaces inclined at a specified angle with respect to the third direction (e.g., the z-axis direction) that is the thickness direction of the display 1720. The inclined surfaces 1761b may have a trapezoidal shape having a gradually decreasing width in the third direction (e.g., the z-axis direction). However, the shapes of the inclined surfaces 1761b are not limited thereto. For example, the inclined surfaces 1761b may include a region having a curvature.

In an embodiment, the third side support part 1764 may extend from the third cover part 1761 in the third direction (e.g., the z-axis direction) that is the thickness direction of the display 1720. The third side support part 1764 may be disposed on a first side surface of the display 1720.

In an embodiment, the fourth cover part 1762 may be at least partially located on one edge region of the first surface 1720a in the outermost layer region P13 of the display 1720. The fourth cover part 1762 may be located on the non-display region, NA, of the first surface 1720a of the display 1720 and may be spaced apart from the display region, AA. A central region of the fourth cover part 1762 may have a greater thickness than an edge region of the fourth cover part 1762. An upper surface 1762a and 1762b of the fourth cover part 1762 may include the flat surface 1762a located on a central portion of the upper surface 1762a and 1762b and the inclined surfaces 1762b surrounding the flat surface 1762a. The flat surface 1762a may be a surface substantially parallel to the first direction (e.g., the x-axis direction) and the second direction (e.g., the y-axis direction) that are perpendicular to the third direction (e.g., the z-axis direction). The inclined surfaces 1762b may be surfaces inclined at a specified angle with respect to the third direction (e.g., the z-axis direction) that is the thickness direction of the display 1720. The inclined surfaces 1762b may have a trapezoidal shape having a gradually decreasing width in the third direction (e.g., the z-axis direction). However, the shapes of the inclined surfaces 1762b are not limited thereto. For example, the inclined surfaces 1762b may include a region having a curvature.

In an embodiment, the fourth side support part 1765 may extend from the fourth cover part 1762 in the third direction (e.g., the z-axis direction) that is the thickness direction of the display 1720. The fourth side support part 1765 may be disposed on a second side surface of the display 1720 that faces away from the first side surface of the display 1720.

In an embodiment, the thickness h2 of the partial support member 1760 in the third direction (e.g., the z-axis direction) may be smaller than the thickness h1 of the support member 1750 in the third direction (e.g., the z-axis direction). The electronic device 1700 according to an embodiment may include the partial support member 1760 coupled to the outermost layer region P12, and thus the volume of the display 1720 in the state of being wound around the roller member 1710 (e.g., the first state 101 of FIG. 1) may be reduced.

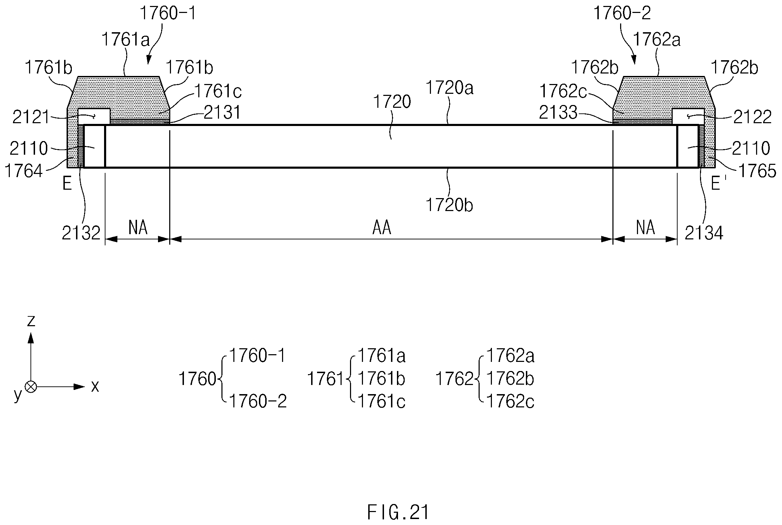

FIG. 21 is a sectional view of the electronic device taken along line E-E' of FIG. 18 according to an embodiment.

Referring to FIG. 21, the electronic device according to an embodiment may include the display 1720, the partial support members 1760 coupled to the display 1720, sealing members 2110 located on the side surfaces of the display 1720, and adhesive members 2131, 2132, 2133, and 2134. The partial support members 1760 may include the first partial support member 1760-1 located at one edge of the display 1720 and the second partial support member 1760-2 located at an opposite edge of the display 1720 that faces away from the one edge of the display 1720.

In an embodiment, the display 1720 may include the first surface 1720a that displays an image and the second surface 1720b facing away from the first surface 1720a. The display 1720 may include the display region, AA, that displays an image and the non-display region, NA, that is adjacent to the display region, AA, and does not display an image. The display 1720 may further include a polarization layer (not illustrated) for preventing reflection of external light.

In an embodiment, the first partial support member 1760-1 may include the third side support part 1764 and the third cover part 1761. The second partial support member 1760-2 may include the fourth side support part 1765 and the fourth cover part 1762.

In an embodiment, the third cover part 1761 may include the flat surface 1761a located on the central portion of the upper surface thereof, the inclined surfaces 1761b surrounding the flat surface 1761a, and a protrusion 1761c. The flat surface 1761a may be flat in a direction substantially perpendicular to the third direction (e.g., the z-axis direction). The inclined surfaces 1761b may be surfaces inclined at the specified angle with respect to the third direction (e.g., the z-axis direction) that is the thickness direction of the display 1720. The protrusion 1761c may protrude in a direction (e.g., the -z-axis direction) in which the display 1720 is located. The partial support member 1760 may include a groove 2121 formed by the third cover part 1761, the protrusion 1761c, and the third side support part 1764. The third cover part 1761 may be attached to the first surface 1720a of the display 1720 by the adhesive member 2131.

In an embodiment, the third side support part 1764 may extend from the third cover part 1761 in the third direction (e.g., the z-axis direction) that is the thickness direction of the display 1720. The third side support part 1764 may be attached to the first side surface (or, the sealing member 2110) of the display 1720 by the adhesive member 2132. For example, the adhesive member 2132 may be located between the third side support part 1764 and the sealing member 2110.

In an embodiment, the fourth cover part 1762 may include the flat surface 1762a located on the central portion of the upper surface thereof, the inclined surfaces 1762b surrounding the flat surface 1762a, and a protrusion 1762c. The flat surface 1762a may be flat in a direction substantially perpendicular to the third direction (e.g., the z-axis direction). The inclined surfaces 1762b may be surfaces inclined at the specified angle with respect to the third direction (e.g., the z-axis direction) that is the thickness direction of the display 1720. The protrusion 1762c may protrude in the direction in which the display 1720 is located. The partial support member 1760 may include a groove 2122 formed by the fourth cover part 1762, the protrusion 1762c, and the fourth side support part 1765. The fourth cover part 1762 may be attached to the first surface 1720a of the display 1720 by the adhesive member 2133.

In an embodiment, the fourth side support part 1765 may extend from the fourth cover part 1762 in the third direction (e.g., the z-axis direction) that is the thickness direction of the display 1720. The fourth side support part 1765 may be attached to the second side surface (or, the sealing member 2110) of the display 1720 by the adhesive member 2132. For example, the adhesive member 2134 may be located between the fourth side support part 1765 and the sealing member 2110.

In an embodiment, the sealing members 2110 may be located on the side surfaces of the display 1720. The sealing members 2110 may be located between the display 1720 and the third side support part 1764 and between the display 1720 and the fourth side support part 1765.

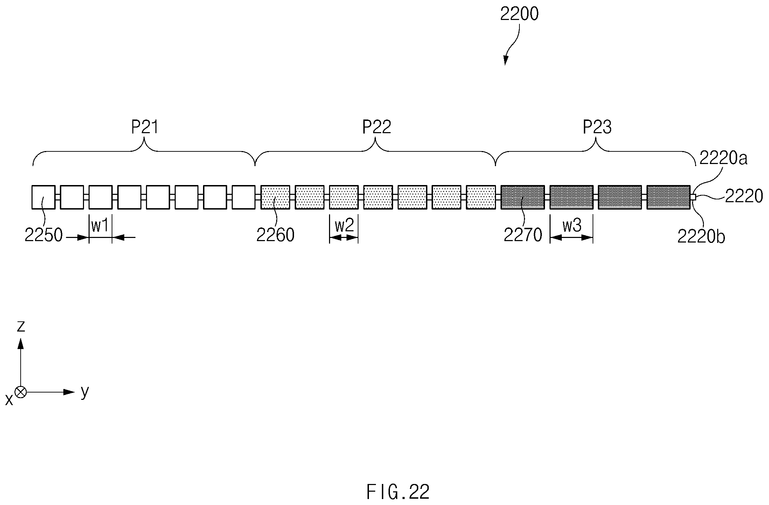

Hereinafter, an electronic device 2200 according to an embodiment will be described with reference to FIG. 22. FIG. 22 is a side view illustrating the electronic device 2200 according to an embodiment.

Referring to FIG. 22, the electronic device 2200 according to an embodiment may include a display 2220 and a plurality of support members 2250, 2260, and 2270.

In an embodiment, the display 2220 may include a first surface 2220a that displays an image and a second surface 2220b facing away from the first surface 2220a. In a state in which the display 2220 is wound around a roller member (not illustrated) (e.g., the first state 101 of FIG. 1), the display 2220 may include an innermost layer region P21 wound in the innermost layer, an outermost layer region P23 wound in the outermost layer, and an intermediate layer region P22 between the innermost layer region P21 and the outermost layer region P23.

In an embodiment, side surfaces of the plurality of support members 2250, 2260, and 2270 may have a quadrangular shape. However, the shapes of the plurality of support members 2250, 2260, and 2270 are not limited thereto. The plurality of support members 2250, 2260, and 2270 may include the first support members 2250 coupled to the innermost layer region P21 of the display 2220, the second support members 2260 coupled to the intermediate layer region P22, and the third support members 2270 coupled to the outermost layer region P23. The plurality of support members 2250, 2260, and 2270 may be referred to as the support members 150 of FIG. 5, the support members 150 of FIG. 9, or the support members 1050 of FIG. 13.

In an embodiment, the width w1 of the first support member 2250 may be smaller than the width w2 of the second support member 2260, and the width w2 of the second support member 2260 may be smaller than the width w3 of the third support member 2270. In some embodiments, the widths of the plurality of support members 2250, 2260, and 2270 may be gradually increased from the innermost layer region P21 to the outermost layer region P23.

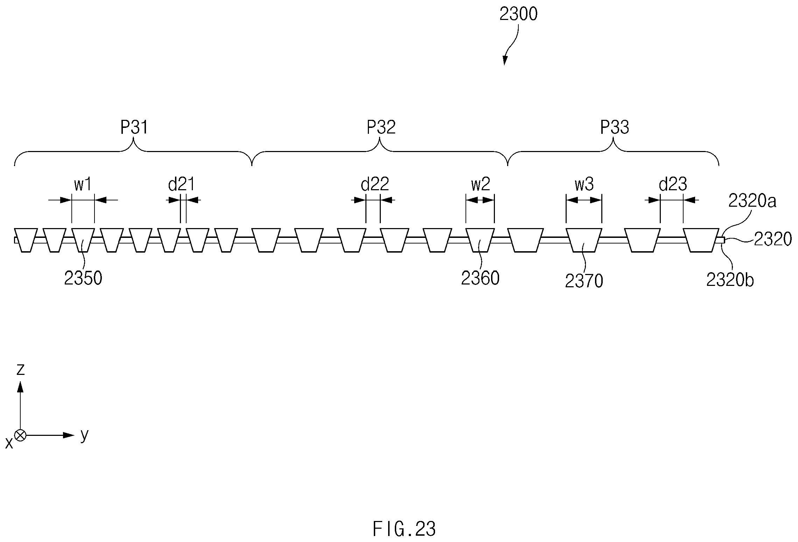

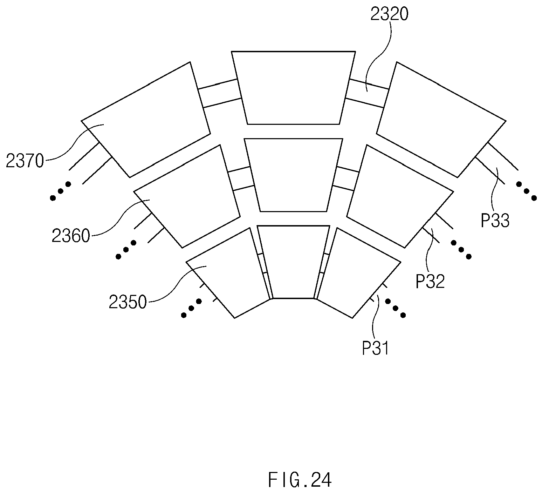

Hereinafter, an electronic device 2300 according to an embodiment will be described with reference to FIGS. 23 and 24. FIG. 23 is a side view illustrating the electronic device 2300 according to an embodiment. FIG. 24 is a side view illustrating one region in a state in which a display of the electronic device 2300 is wound according to an embodiment.

Referring to FIG. 23, the electronic device 2300 according to an embodiment may include the display 2320 and a plurality of support members 2350, 2360, and 2370.

In an embodiment, the display 2320 may include a first surface 2320a that displays an image and a second surface 2320b facing away from the first surface 2320a. In the state in which the display 2320 is wound (e.g., the first state 101 of FIG. 1), the display 2320 may include an innermost layer region P31 wound in the innermost layer, an outermost layer region P33 wound in the outermost layer, and an intermediate layer region P32 between the innermost layer region P31 and the outermost layer region P33.

In an embodiment, side surfaces of the plurality of support members 2350, 2360, and 2370 may have a trapezoidal shape. However, the shapes of the plurality of support members 2350, 2360, and 2370 are not limited thereto. The plurality of support members 2350, 2360, and 2370 may include the first support members 2350 coupled to the innermost layer region P31 of the display 2320, the second support members 2360 coupled to the intermediate layer region P32, and the third support members 2370 coupled to the outermost layer region P33. The plurality of support members 2350, 2360, and 2370 may be referred to as the support members 150 of FIG. 5, the support members 150 of FIG. 9, or the support members 1050 of FIG. 13.

In an embodiment, in the trapezoidal side surfaces, the width w1 of the long side of the first support member 2350 may be smaller than the width w2 of the long side of the second support member 2360, and the width w2 of the long side of the second support member 2360 may be smaller than the width w3 of the long side of the third support member 2370. In some embodiments, the widths of the long sides of the plurality of support members 2350, 2360, and 2370 may be gradually increased from the innermost layer region P31 to the outermost layer region P33.

In an embodiment, the distance d22 between the second support members 2360 may be greater than the distance d21 between the first support members 2350. The distance d23 between the third support members 2370 may be greater than the distance d22 between the second support members 2360.

Referring to FIG. 24, the display 2320 may be wound such that the short sides of the trapezoidal side surfaces of the plurality of support members 2350, 2360, and 2370 face toward the inside. When the display 2320 is wound in layers, a layer farther away from the center may have a larger circumference (or, perimeter), and therefore the display 2320 may be stably wound by differently setting widths and gaps for respective regions. In addition, the side surfaces of the plurality of support members 2350, 2360, and 2370 may have a trapezoidal shape, and thus the display 2320 may be prevented from being stopped when wound or unwound.

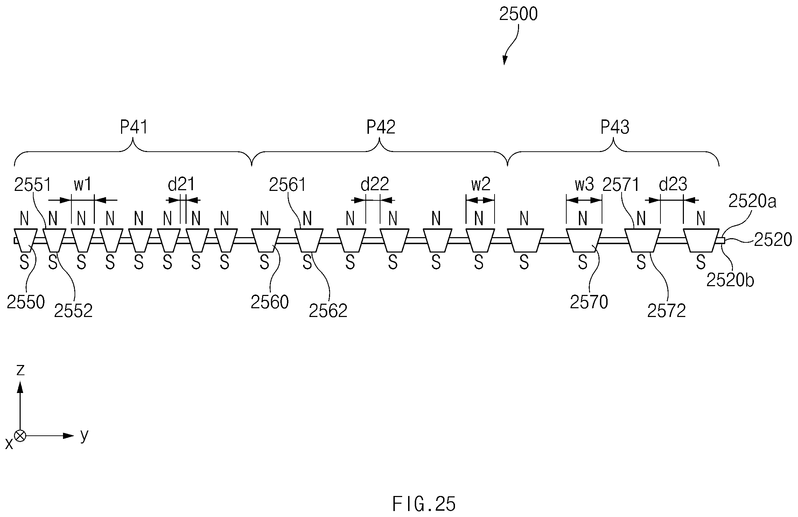

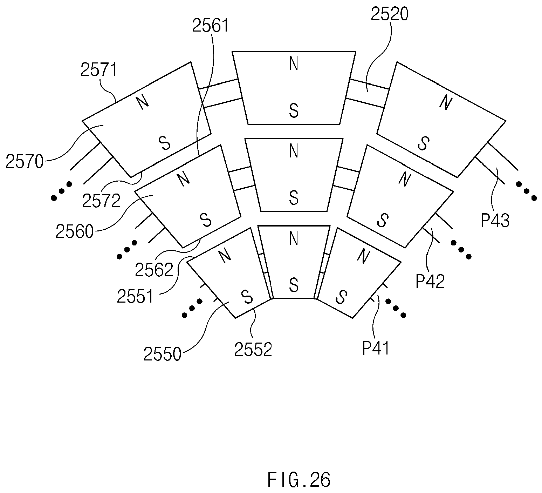

Hereinafter, an electronic device 2500 according to an embodiment will be described with reference to FIGS. 25 and 26. FIG. 25 is a side view illustrating the electronic device 2500 according to an embodiment. FIG. 26 is a side view illustrating one region in a state in which a display of the electronic device 2500 is wound according to an embodiment.

The electronic device 2500 according to an embodiment may include the display 2520 and a plurality of support members 2550, 2560, and 2570.

In an embodiment, the display 2520 may include a first surface 2520a that displays an image and a second surface 2520b facing away from the first surface 2520a. In the state in which the display 2520 is wound around a roller member (not illustrated) (e.g., the first state 101 of FIG. 1), the display 2520 may include an innermost layer region P41 wound in the innermost layer, an outermost layer region P43 wound in the outermost layer, and an intermediate layer region P42 between the innermost layer region P41 and the outermost layer region P43.

In an embodiment, side surfaces of the plurality of support members 2550, 2560, and 2570 may have a trapezoidal shape. However, the shapes of the plurality of support members 2550, 2560, and 2570 are not limited thereto. The plurality of support members 2550, 2560, and 2570 may include the first support members 2550 coupled to the innermost layer region P41 of the display 2520, the second support members 2560 coupled to the intermediate layer region P42, and the third support members 2570 coupled to the outermost layer region P43. The plurality of support members 2550, 2560, and 2570 may be referred to as the support members 150 of FIG. 5, the support members 150 of FIG. 9, or the support members 1050 of FIG. 13.

In an embodiment, in the trapezoidal side surfaces, the width w1 of the long side of the first support member 2550 may be smaller than the width w2 of the long side of the second support member 2560, and the width w2 of the long side of the second support member 2560 may be smaller than the width w3 of the long side of the third support member 2570. In some embodiments, the widths of the long sides of the plurality of support members 2550, 2560, and 2570 may be gradually increased from the innermost layer region P41 to the outermost layer region P43.

In an embodiment, the distance d22 between the second support members 2560 may be greater than the distance d21 between the first support members 2550. The distance d23 between the third support members 2570 may be greater than the distance d22 between the second support members 2560.

In an embodiment, the plurality of support members 2550, 2560, and 2570 may include magnetic regions 2551, 2552, 2561, 2562, 2571, and 2572 exhibiting polarities. For example, the plurality of support members 2550, 2560, and 2570 may include magnetic bodies (e.g., magnets) in the magnetic regions 2551, 2552, 2561, 2562, 2571, and 2572.

In an embodiment, the first support member 2550 may include the first magnetic region 2551 located on one surface of the first support member 2550 and the second magnetic region 2552 located on another surface of the first support member 2550. For example, the first magnetic region 2551 may be located on an upper surface (e.g., a surface facing in the z-axis direction) of the first support member 2550, and the second magnetic region 2552 may be located on a lower surface (e.g., a surface facing in the -z-axis direction) of the first support member 2550. In another example, the first magnetic region 2551 may be located on one surface of a cover part (e.g., the cover parts 151 and 152 of FIG. 5, the cover parts 151 and 152 of FIG. 9, or the cover parts 1051 and 1052 of FIG. 13) of the first support member 2550, and the second magnetic region 2552 may be located on one region of a body part (e.g., the body part 153 of FIG. 5, the body part 153 of FIG. 9, or the body part 1053 of FIG. 13). The first magnetic region 2551 may exhibit a first polarity (e.g., N pole), and the second magnetic region 2552 may exhibit a second polarity (e.g., S pole). An attractive force may act between the first polarity and the second polarity.

In an embodiment, the second support member 2560 may include the first magnetic region 2561 located on one surface of the second support member 2560 and the second magnetic region 2562 located on another surface of the second support member 2560. For example, the first magnetic region 2561 may be located on an upper surface (e.g., a surface facing in the z-axis direction) of the second support member 2560, and the second magnetic region 2562 may be located on a lower surface (e.g., a surface facing in the -z-axis direction) of the second support member 2560. In another example, the first magnetic region 2561 may be located on one surface of a cover part of the second support member 2560, and the second magnetic region 2562 may be located on one region of a body part. The first magnetic region 2561 may exhibit a first polarity (e.g., N pole), and the second magnetic region 2562 may exhibit a second polarity (e.g., S pole).

In an embodiment, the third support member 2570 may include the first magnetic region 2571 located on one surface of the third support member 2570 and the second magnetic region 2572 located on another surface of the third support member 2570. For example, the first magnetic region 2571 may be located on an upper surface (e.g., a surface facing in the z-axis direction) of the third support member 2570, and the second magnetic region 2572 may be located on a lower surface (e.g., a surface facing in the -z-axis direction) of the third support member 2570. In another example, the first magnetic region 2571 may be located on one surface of a cover part of the third support member 2570, and the second magnetic region 2572 may be located on one region of a body part. The first magnetic region 2571 may exhibit a first polarity (e.g., N pole), and the second magnetic region 2572 may exhibit a second polarity (e.g., S pole).

Referring to FIG. 26, the display 2520 may be wound such that the short sides of the trapezoidal side surfaces of the plurality of support members 2550, 2560, and 2570 face toward the inside. In the state in which the display 2520 is wound (e.g., the first state 101 of FIG. 1), the first magnetic region 2551, 2561, or 2571 of the support member 2550, 2560, or 2570 coupled to one layer (hereinafter, referred to as the "first layer") of the display 2520 may be disposed to face the second magnetic region 2522, 2562, or 2572 of the support member 2550, 2560, or 2570 coupled to the adjacent next layer (hereinafter, referred to as the "second layer") of the display 2520. For example, the first magnetic region 2551 of the first support member 2550 may be disposed to face the second magnetic region 2562 of the second support member 2560, and the first magnetic region 2561 of the second support member 2560 may be disposed to face the second magnetic region 2572 of the third support member 2570. Due to the attractive force between the first magnetic region 2551, 2561, or 2571 of the support member 2550, 2560, or 2570 coupled to the first layer and the second magnetic region 2522, 2562, or 2572 of the support member 2550, 2560, or 2570 coupled to the second layer, the second layer may be wound around the first layer without being lifted.

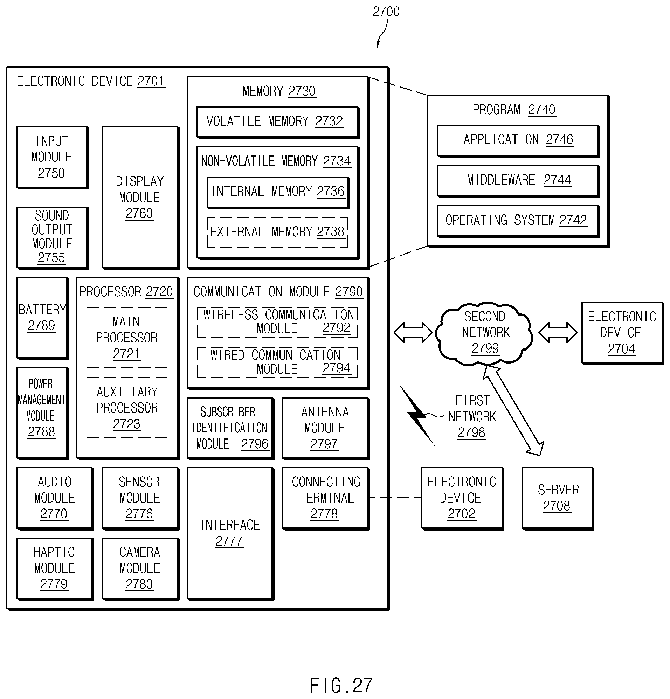

FIG. 27 is a block diagram illustrating an electronic device 2701 in a network environment 2700 according to various embodiments. Referring to FIG. 27, the electronic device 2701 in the network environment 2700 may communicate with an electronic device 2702 via a first network 2798 (e.g., a short-range wireless communication network), or at least one of an electronic device 2704 or a server 2708 via a second network 2799 (e.g., a long-range wireless communication network). According to an embodiment, the electronic device 2701 may communicate with the electronic device 2704 via the server 2708. According to an embodiment, the electronic device 2701 may include a processor 2720, memory 2730, an input module 2750, a sound output module 2755, a display module 2760, an audio module 2770, a sensor module 2776, an interface 2777, a connecting terminal 2778, a haptic module 2779, a camera module 2780, a power management module 2788, a battery 2789, a communication module 2790, a subscriber identification module (SIM) 2796, or an antenna module 2797. In some embodiments, at least one of the components (e.g., the connecting terminal 2778) may be omitted from the electronic device 2701, or one or more other components may be added in the electronic device 2701. In some embodiments, some of the components (e.g., the sensor module 2776, the camera module 2780, or the antenna module 2797) may be implemented as a single component (e.g., the display module 2760).

The processor 2720 may execute, for example, software (e.g., a program 2740) to control at least one other component (e.g., a hardware or software component) of the electronic device 2701 coupled with the processor 2720, and may perform various data processing or computation. According to one embodiment, as at least part of the data processing or computation, the processor 2720 may store a command or data received from another component (e.g., the sensor module 2776 or the communication module 2790) in volatile memory 2732, process the command or the data stored in the volatile memory 2732, and store resulting data in non-volatile memory 2734. According to an embodiment, the processor 2720 may include a main processor 2721 (e.g., a central processing unit (CPU) or an application processor (AP)), or an auxiliary processor 2723 (e.g., a graphics processing unit (GPU), a neural processing unit (NPU), an image signal processor (ISP), a sensor hub processor, or a communication processor (CP)) that is operable independently from, or in conjunction with, the main processor 2721. For example, when the electronic device 2701 includes the main processor 2721 and the auxiliary processor 2723, the auxiliary processor 2723 may be adapted to consume less power than the main processor 2721, or to be specific to a specified function. The auxiliary processor 2723 may be implemented as separate from, or as part of the main processor 2721.

The auxiliary processor 2723 may control at least some of functions or states related to at least one component (e.g., the display module 2760, the sensor module 2776, or the communication module 2790) among the components of the electronic device 2701, instead of the main processor 2721 while the main processor 2721 is in an inactive (e.g., sleep) state, or together with the main processor 2721 while the main processor 2721 is in an active state (e.g., executing an application). According to an embodiment, the auxiliary processor 2723 (e.g., an image signal processor or a communication processor) may be implemented as part of another component (e.g., the camera module 2780 or the communication module 2790) functionally related to the auxiliary processor 2723. According to an embodiment, the auxiliary processor 2723 (e.g., the neural processing unit) may include a hardware structure specified for artificial intelligence model processing. An artificial intelligence model may be generated by machine learning. Such learning may be performed, e.g., by the electronic device 2701 where the artificial intelligence is performed or via a separate server (e.g., the server 2708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2730 may store various data used by at least one component (e.g., the processor 2720 or the sensor module 2776) of the electronic device 2701. The various data may include, for example, software (e.g., the program 2740) and input data or output data for a command related thereto. The memory 2730 may include the volatile memory 2732 or the non-volatile memory 2734.

The program 2740 may be stored in the memory 2730 as software, and may include, for example, an operating system (OS) 2742, middleware 2744, or an application 2746.

The input module 2750 may receive a command or data to be used by another component (e.g., the processor 2720) of the electronic device 2701, from the outside (e.g., a user) of the electronic device 2701. The input module 2750 may include, for example, a microphone, a mouse, a keyboard, a key (e.g., a button), or a digital pen (e.g., a stylus pen).

The sound output module 2755 may output sound signals to the outside of the electronic device 2701. The sound output module 2755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2760 may visually provide information to the outside (e.g., a user) of the electronic device 2701. The display module 2760 may include, for example, a display, a hologram device, or a projector and control circuitry to control a corresponding one of the display, hologram device, and projector. According to an embodiment, the display module 2760 may include a touch sensor adapted to detect a touch, or a pressure sensor adapted to measure the intensity of force incurred by the touch.

The audio module 2770 may convert a sound into an electrical signal and vice versa. According to an embodiment, the audio module 2770 may obtain the sound via the input module 2750, or output the sound via the sound output module 2755 or a headphone of an external electronic device (e.g., an electronic device 2702) directly (e.g., wired) or wirelessly coupled with the electronic device 2701.

The sensor module 2776 may detect an operational state (e.g., power or temperature) of the electronic device 2701 or an environmental state (e.g., a state of a user) external to the electronic device 2701, and then generate an electrical signal or data value corresponding to the detected state. According to an embodiment, the sensor module 2776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2777 may support one or more specified protocols to be used for the electronic device 2701 to be coupled with the external electronic device (e.g., the electronic device 2702) directly (e.g., wired) or wirelessly. According to an embodiment, the interface 2777 may include, for example, a high definition multimedia interface (HDMI), a universal serial bus (USB) interface, a secure digital (SD) card interface, or an audio interface.

A connecting terminal 2778 may include a connector via which the electronic device 2701 may be physically connected with the external electronic device (e.g., the electronic device 2702). According to an embodiment, the connecting terminal 2778 may include, for example, a HDMI connector, a USB connector, a SD card connector, or an audio connector (e.g., a headphone connector).

The haptic module 2779 may convert an electrical signal into a mechanical stimulus (e.g., a vibration or a movement) or electrical stimulus which may be recognized by a user via his tactile sensation or kinesthetic sensation. According to an embodiment, the haptic module 2779 may include, for example, a motor, a piezoelectric element, or an electric stimulator.

The camera module 2780 may capture a still image or moving images. According to an embodiment, the camera module 2780 may include one or more lenses, image sensors, image signal processors, or flashes.

The power management module 2788 may manage power supplied to the electronic device 2701. According to one embodiment, the power management module 2788 may be implemented as at least part of, for example, a power management integrated circuit (PMIC).

The battery 2789 may supply power to at least one component of the electronic device 2701. According to an embodiment, the battery 2789 may include, for example, a primary cell which is not rechargeable, a secondary cell which is rechargeable, or a fuel cell.

The communication module 2790 may support establishing a direct (e.g., wired) communication channel or a wireless communication channel between the electronic device 2701 and the external electronic device (e.g., the electronic device 2702, the electronic device 2704, or the server 2708), and performing communication via the established communication channel. The communication module 2790 may include one or more communication processors that are operable independently from the processor 2720 (e.g., the application processor (AP)) and supports a direct (e.g., wired) communication or a wireless communication. According to an embodiment, the communication module 2790 may include a wireless communication module 2792 (e.g., a cellular communication module, a short-range wireless communication module, or a global navigation satellite system (GNSS) communication module) or a wired communication module 2794 (e.g., a local area network (LAN) communication module or a power line communication (PLC) module). A corresponding one of these communication modules may communicate with the external electronic device via the first network 2798 (e.g., a short-range communication network, such as BluetoothTM, wireless-fidelity (Wi-Fi) direct, or infrared data association (IrDA)) or the second network 2799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2792 may identify and authenticate the electronic device 2701 in a communication network, such as the first network 2798 or the second network 2799, using subscriber information (e.g., international mobile subscriber identity (IMSI)) stored in the subscriber identification module 2796.

The wireless communication module 2792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2792 may support a high-frequency band (e.g., the mmWave band) to achieve, e.g., a high data transmission rate. The wireless communication module 2792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2792 may support various requirements specified in the electronic device 2701**,** an external electronic device (e.g., the electronic device 2704), or a network system (e.g., the second network 2799). According to an embodiment, the wireless communication module 2792 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 2797 may transmit or receive a signal or power to or from the outside (e.g., the external electronic device) of the electronic device 2701. According to an embodiment, the antenna module 2797 may include an antenna including a radiating element composed of a conductive material or a conductive pattern formed in or on a substrate (e.g., a printed circuit board (PCB)). According to an embodiment, the antenna module 2797 may include a plurality of antennas (e.g., array antennas). In such a case, at least one antenna appropriate for a communication scheme used in the communication network, such as the first network 2798 or the second network 2799, may be selected, for example, by the communication module 2790 (e.g., the wireless communication module 2792) from the plurality of antennas. The signal or the power may then be transmitted or received between the communication module 2790 and the external electronic device via the selected at least one antenna. According to an embodiment, another component (e.g., a radio frequency integrated circuit (RFIC)) other than the radiating element may be additionally formed as part of the antenna module 2797.

According to various embodiments, the antenna module 2797 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2701 and the external electronic device 2704 via the server 2708 coupled with the second network 2799. Each of the electronic devices 2702 or 2704 may be a device of a same type as, or a different type, from the electronic device 2701. According to an embodiment, all or some of operations to be executed at the electronic device 2701 may be executed at one or more of the external electronic devices 2702, 2704, or 2708. For example, if the electronic device 2701 should perform a function or a service automatically, or in response to a request from a user or another device, the electronic device 2701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2701. The electronic device 2701 may provide the outcome, with or without further processing of the outcome, as at least part of a reply to the request. To that end, a cloud computing, distributed computing, mobile edge computing (MEC), or client-server computing technology may be used, for example. The electronic device 2701 may provide ultra low-latency services using, e.g., distributed computing or mobile edge computing. In another embodiment, the external electronic device 2704 may include an internet-of-things (IoT) device. The server 2708 may be an intelligent server using machine learning and/or a neural network. According to an embodiment, the external electronic device 2704 or the server 2708 may be included in the second network 2799. The electronic device 2701 may be applied to intelligent services (e.g., smart home, smart city, smart car, or healthcare) based on 5G communication technology or IoT-related technology.

An electronic device according to an embodiment may include a flexible display 120 including a first surface 120a that displays an image and a second surface 120b that faces away from the first surface 120a and a plurality of support members 150 coupled to the display 120 and spaced apart from each other. The plurality of support members 150 may include a first support member 150. The first support member 150 may include a body part 153 that is disposed on the second surface 120b of the display 120 and that extends from one end portion to an opposite end portion of the display 120, a first side support part 154 that extends from one end of the body part 153 and that is located on a first side surface of the display 120, a first cover part 151 that extends from the first side support part 154 and that is located on the first surface 120a of the display 120, a second side support part 155 that extends from an opposite end of the body part 153 and that is located on a second side surface of the display 120, and a second cover part 152 that extends from the second side support part 155 and that is located on the first surface 120a of the display 120. The body part 153, the first side support part 154, the first cover part 151, the second side support part 155, and the second cover part 152 may be integrally formed.

In an embodiment, an upper surface of the first cover part 151 may include a flat surface 151a located on a central portion of the upper surface of the first cover part 151 and an inclined surface 151b that surrounds the flat surface 151a and that is inclined with respect to a thickness direction of the display 120.

In an embodiment, the first cover part 151 may include a protrusion 151c that protrudes in a direction (e.g., the -z-axis direction) in which the display 120 is located, the protrusion 151c being brought into contact with the first surface 120a of the display 120.

In an embodiment, the electronic device may further include a sealing member 510 located between the display 120 and the first side support part 154.

In an embodiment, the electronic device may further include a housing 110 and a roller member 610 located in the housing 110, and the display 120 may be wound around the roller member such that the first cover part 151 and the second cover part 152 face toward the inside and the body part 153 faces toward the outside.

In an embodiment, the body part 153 may include at least one groove 810.

In an embodiment, the body part 153 may include a first curved region 1053a and a second curved region 1053b located on opposite end portions thereof and convex in one direction, the first cover part 1051 may include a third curved region 1051a convex in one direction, and the second cover part may include a fourth curved region 1052a convex in one direction.

In an embodiment, the first curved region 1053a and the third curved region 1051a may overlap each other in a thickness direction of the display 1020, and the second curved region 1053b and the fourth curved region 1052a may overlap each other in the thickness direction of the display 1020.

In an embodiment, the electronic device may further include a connecting member 1510, one end of which is connected to the first support member 1050. The plurality of support members may further include a second support member adjacent to the first support member, and an opposite end of the connecting member 1510 may be connected to the second support member.

In an embodiment, the electronic device may further include a roller member 1610 around which the display 1020 is wound along an outer perimeter surface, and the roller member 1610 may include a receiving groove 1615 in which the third curved region 1051a is accommodated in a state in which the display 1020 is wound around the roller member 1610.

In an embodiment, the electronic device may further include a roller member 1710 around which the display 1720 is wound along an outer perimeter surface. In a state in which the display 1720 is wound around the roller member 1710, the display 1720 may include an innermost layer region P11 corresponding to a region disposed in an innermost layer, an outermost layer region P13 corresponding to a region disposed in an outermost layer, and an intermediate layer region P12 corresponding to a region between the innermost layer region and the outermost layer region.

In an embodiment, the plurality of support members further may include a first partial support member 1760-1 coupled to one end portion of the outermost layer region P13 of the display 1720 and a second partial support member 1760-2 coupled to an opposite end portion of the outermost layer region P13 of the display and spaced apart from the first partial support member 1760-1. The first support member 1750 may be coupled to the intermediate layer region P12 of the display, and the first partial support member 1760-1 may have a smaller thickness than the first support member 1750.

In an embodiment, the first partial support member 1760-1 may be located on the first surface 1720a and the first side surface of the display 1720, the second partial support member 1760-2 may be located on the first surface 1720a and the second side surface of the display 1720, and the first partial support member 1760-1 and the second partial support member 1760-2 may be spaced apart from the second surface 1720b of the display.

In an embodiment, the plurality of support members may further include a second support member 2260 coupled to the intermediate layer region P22 of the display 2220 and a third support member 2270 coupled to the outermost layer region P23 of the display. The first support member 2250 may be coupled to the innermost layer region P21 of the display. A width w1 of the first support member may be smaller than a width w2 of the second support member, and the width of the second support member may be smaller than a width w3 of the third support member.

In an embodiment, the plurality of support members may include support members coupled to the innermost layer region P31, the intermediate layer region P32, and the outermost layer region P33 of the display 2320. A distance d22 between support members 2360 coupled to the intermediate layer region may be greater than a distance d21 between support members 2350 coupled to the innermost layer region, and a distance d23 between support members 2370 coupled to the outermost layer region may be greater than the distance d22 between the support members 2360 coupled to the intermediate layer region.

In an embodiment, the first support member may include a first magnetic region 2551, 2561, or 2571 that is located on one surface of the first support member, and that exhibits a first polarity, and a second magnetic region 2552, 2562, or 2572 that is located on another surface of the first support member and that exhibits a second polarity.

An electronic device according to an embodiment may include a housing 110, a roller member 610 disposed in the housing 110, a display 120 including a first surface 120a and a second surface 120b that face away from each other, in which in a first state, the display is wound around the roller member 610 and disposed in the housing 110, and in the second state, the display is unwound from the roller member and withdrawn from the housing 110, and a plurality of support members 150 coupled to the display 120. The plurality of support members 150 may include a first support member 150. The first support member 150 may include a body part 153 that is disposed on the second surface 120b of the display 120 and that extends from one end portion to an opposite end portion of the display 120, a first side support part 154 that extends from one end of the body part 153 and that is located on a first side surface of the display 120, a first cover part 151 that extends from the first side support part 154 and that is located on the first surface 120a of the display 120, a second side support part 155 that extends from an opposite end of the body part 153 and that is located on a second side surface of the display 120, and a second cover part 152 that extends from the second side support part 155 and that is located on the first surface 120a of the display 120. In the first cover part 151 and/or the second cover part 152, a central region may be thicker than an edge region.

In an embodiment, the display 120 may include a display region, AA, that displays an image and a non-display region, NA, located around the display region, AA, and the first cover part 151 and the second cover part 152 may be located on the non-display region, NA, and may be spaced apart from the display region, AA.

In an embodiment, the plurality of support members 150 may be coupled to the display 120 so as to be movable relative to the display 120.

In an embodiment, side surfaces of the plurality of support members 150 may have a trapezoidal shape.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2740) including one or more instructions that are stored in a storage medium (e.g., internal memory 2736 or external memory 2738) that is readable by a machine (e.g., the electronic device 2701). For example, a processor (e.g., the processor 2720) of the machine (e.g., the electronic device 2701) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100) comprising:
a flexible display (120) including a first surface (120a) configured to display an image and a second surface (120b) configured to face away from the first surface; and
a plurality of support members (150) coupled to the display and spaced apart from each other,
wherein the plurality of support members include a first support member (150),
wherein the first support member includes:
a body part (153) disposed on the second surface of the display and configured to extend from one end portion to an opposite end portion of the display;
a first side support part (154) configured to extend from one end of the body part and located on a first side surface of the display;
a first cover part (151) configured to extend from the first side support part and located on the first surface of the display;
a second side support part (155) configured to extend from an opposite end of the body part and located on a second side surface of the display; and
a second cover part (152) configured to extend from the second side support part and located on the first surface of the display, and
wherein the body part, the first side support part, the first cover part, the second side support part, and the second cover part are integrally formed; and
**characterised in that** the first support member further comprises at least one of a first sealing member (510) located between the display and the first side support part (154) and a second sealing member (510) located between the display and the second side support part (155).

2. The electronic device of claim 1, wherein an upper surface of the first cover part includes:
a flat surface (151a) located on a central portion of the upper surface of the first cover part; and
an inclined surface (151b) configured to surround the flat surface and inclined with respect to a thickness direction of the display.

3. The electronic device of claim 2, wherein the first cover part includes a protrusion (151c) configured to protrude in a direction in which the display is located, the protrusion being brought into contact with the first surface of the display.

4. The electronic device of claim 3, further comprising:
a housing; and
a roller member located in the housing,
wherein the display is wound around the roller member such that the first cover part and the second cover part face toward the inside and the body part faces toward the outside.

5. The electronic device of claim 1, wherein the body part includes at least one groove (810).

6. The electronic device of claim 1, wherein the body part includes a first curved region (1053a) and a second curved region (1053b) located on opposite end portions thereof and convex in one direction,
wherein the first cover part includes a third curved region (1051a) convex in one direction, and
wherein the second cover part includes a fourth curved region (1052a) convex in one direction.

7. The electronic device of claim 6, wherein the first curved region and the third curved region overlap each other in a thickness direction of the display, and
wherein the second curved region and the fourth curved region overlap each other in the thickness direction of the display.

8. The electronic device of claim 6, further comprising:
a connecting member (1510), one end of which is connected to the first support member,
wherein the plurality of support members further include a second support member adjacent to the first support member, and
wherein an opposite end of the connecting member is connected to the second support member.

9. The electronic device of claim 6, further comprising:
a roller member around which the display is wound along an outer perimeter surface,
wherein the roller member includes a receiving groove in which the third curved region is accommodated in a state in which the display is wound around the roller member.

10. The electronic device of claim 1, further comprising:
a roller member around which the display is wound along an outer perimeter surface,
wherein in a state in which the display is wound around the roller member, the display includes:
an innermost layer region (P11) corresponding to a region disposed in an innermost layer;
an outermost layer region (P13) corresponding to a region disposed in an outermost layer; and
an intermediate layer region (P12) corresponding to a region between the innermost layer region and the outermost layer region.

11. The electronic device of claim 10, wherein the plurality of support members further include:
a first partial support member coupled to one end portion of the outermost layer region of the display; and
a second partial support member coupled to an opposite end portion of the outermost layer region of the display and spaced apart from the first partial support member,
wherein the first support member is coupled to the intermediate layer region of the display, and
wherein the first partial support member has a smaller thickness than the first support member.

12. The electronic device of claim 11, wherein the first partial support member is located on the first surface and the first side surface of the display,
wherein the second partial support member is located on the first surface and the second side surface of the display, and
wherein the first partial support member and the second partial support member are spaced apart from the second surface of the display.

13. The electronic device of claim 10, wherein the plurality of support members further include a second support member coupled to the intermediate layer region of the display and a third support member coupled to the outermost layer region of the display,
wherein the first support member is coupled to the innermost layer region of the display,
wherein the first support member has a smaller width than the second support member, and
wherein the second support member has a smaller width than the third support member.

14. The electronic device of claim 10, wherein the plurality of support members include support members coupled to the innermost layer region, the intermediate layer region, and the outermost layer region of the display,
wherein a distance between support members coupled to the intermediate layer region is greater than a distance between support members coupled to the innermost layer region, and
wherein a distance between support members coupled to the outermost layer region is greater than the distance between the support members coupled to the intermediate layer region.

## Patentansprüche

1. Elektronische Vorrichtung (100), umfassend:
eine flexible Anzeige (120), die eine erste Oberfläche (120a), die dazu konfiguriert ist, ein Bild anzuzeigen, und eine zweite Oberfläche (120b), die dazu konfiguriert ist, der ersten Oberfläche abgewandt zu sein, beinhaltet; und
eine Vielzahl von Stützelementen (150), die an die Anzeige gekoppelt sind und voneinander beabstandet sind,
wobei die Vielzahl von Stützelementen ein erstes Stützelement (150) beinhaltet,
wobei das erste Stützelement Folgendes beinhaltet:
einen Körperteil (153), der auf der zweiten Oberfläche der Anzeige angeordnet ist und dazu konfiguriert ist, sich von einem Endabschnitt zu einem gegenüberliegenden Endabschnitt der Anzeige zu erstrecken;
einen ersten Seitenstützteil (154), der dazu konfiguriert ist, sich von einem Ende des Körperteils zu erstrecken, und sich an einer ersten Seitenfläche der Anzeige befindet;
einen ersten Abdeckteil (151), der dazu konfiguriert ist, sich von dem ersten Seitenstützteil zu erstrecken, und sich an der ersten Oberfläche der Anzeige befindet;
einen zweiten Seitenstützteil (155), der dazu konfiguriert ist, sich von einem gegenüberliegenden Ende des Körperteils zu erstrecken, und sich auf einer zweiten Seitenfläche der Anzeige befindet; und
einen zweiten Abdeckteil (152), der dazu konfiguriert ist, sich von dem zweiten Seitenstützteil zu erstrecken, und sich auf der ersten Oberfläche der Anzeige befindet, und
wobei der Körperteil, der erste Seitenstützteil, der erste Abdeckteil, der zweite Seitenstützteil und der zweite Abdeckteil einstückig ausgebildet sind; und
**dadurch gekennzeichnet, dass** das erste Stützelement ferner mindestens eines von einem ersten Dichtungselement (510), das sich zwischen der Anzeige und dem erste Seitenstützteil (154) befindet, und einem zweiten Dichtungselement (510), das sich zwischen der Anzeige und dem zweiten Seitenstützteil (155) befindet, umfasst.

2. Elektronische Vorrichtung nach Anspruch 1, wobei eine obere Oberfläche des ersten Abdeckteils Folgendes beinhaltet:
eine flache Oberfläche (151a), die sich auf einem zentralen Abschnitt der oberen Oberfläche des ersten Abdeckteils befindet ist; und
eine geneigte Oberfläche (151b), die dazu konfiguriert ist, die flache Oberfläche zu umgeben, und in Bezug auf eine Dickenrichtung der Anzeige geneigt ist.

3. Elektronische Vorrichtung nach Anspruch 2, wobei der erste Abdeckteil einen Vorsprung (151c) beinhaltet, der dazu konfiguriert ist, in eine Richtung vorzustehen, in der sich die Anzeige befindet, wobei der Vorsprung in Kontakt mit der ersten Oberfläche der Anzeige gebracht wird.

4. Elektronische Vorrichtung nach Anspruch 3, ferner umfassend:
ein Gehäuse; und
ein Rollenelement, das sich in dem Gehäuse befindet,
wobei die Anzeige so um das Rollenelement gewickelt ist, dass der erste Abdeckteil und der zweite Abdeckteil nach innen weisen und der Körperteil nach außen weist.

5. Elektronische Vorrichtung nach Anspruch 1, wobei der Körperteil mindestens eine Nut (810) beinhaltet.

6. Elektronische Vorrichtung nach Anspruch 1, wobei der Körperteil einen ersten gekrümmten Bereich (1053a) und einen zweiten gekrümmten Bereich (1053b) beinhaltet, die sich an gegenüberliegenden End-abschnitten davon befinden und konvex in einer Richtung sind,
wobei der erste Abdeckteil einen dritten gekrümmten Bereich (1051a) beinhaltet, der in einer Richtung konvex ist, und
wobei der zweite Abdeckteil einen vierten gekrümmten Bereich (1052a) beinhaltet, der in einer Richtung konvex ist.

7. Elektronische Vorrichtung nach Anspruch 6, wobei der erste gekrümmte Bereich und der dritte gekrümmte Bereich einander in einer Dickenrichtung der Anzeige überlappen, und
wobei der zweite gekrümmte Bereich und der vierte gekrümmte Bereich einander in der Dickenrichtung der Anzeige überlappen.

8. Elektronische Vorrichtung nach Anspruch 6, ferner umfassend:
ein Verbindungselement (1510), von dem ein Ende mit dem ersten Stützelement verbunden ist,
wobei die Vielzahl von Stützelementen ferner ein zweites Stützelement benachbart zu dem ersten Stützelement beinhaltet, und
wobei ein gegenüberliegendes Ende des Verbindungselements mit dem zweiten Stützelement verbunden ist.

9. Elektronische Vorrichtung nach Anspruch 6, ferner umfassend:
ein Rollenelement, um das die Anzeige entlang einer Außenumfangsfläche gewickelt ist,
wobei das Rollenelement eine Aufnahmenut beinhaltet, in der der dritte gekrümmte Bereich in einem Zustand aufgenommen ist, in dem die Anzeige um das Rollenelement gewickelt ist.

10. Elektronische Vorrichtung nach Anspruch 1, ferner umfassend:
ein Rollenelement, um das die Anzeige entlang einer Außenumfangsfläche gewickelt ist,
wobei in einem Zustand, in dem die Anzeige um das Rollenelement gewickelt ist, die Anzeige Folgendes beinhaltet:
einen innersten Schichtbereich (P11), der einem Bereich entspricht, der in einer innersten Schicht angeordnet ist;
einen äußersten Schichtbereich (P13), der einem Bereich entspricht, der in einer äußersten Schicht angeordnet ist; und
einen Zwischenschichtbereich (P12), der einem Bereich zwischen dem innersten Schichtbereich und dem äußersten Schichtbereich entspricht.

11. Elektronische Vorrichtung nach Anspruch 10, wobei die Vielzahl von Stützelementen ferner Folgendes beinhaltet:
ein erstes Teilstützelement, das an einen Endabschnitt des äußersten Schichtbereichs der Anzeige gekoppelt ist; und
ein zweites Teilstützelement, das an einen gegenüberliegenden Endabschnitt des äußersten Schichtbereichs der Anzeige gekoppelt ist und von dem ersten Teilstützelement beabstandet ist,
wobei das erste Stützelement an den Zwischenschichtbereich der Anzeige gekoppelt ist, und
wobei das erste Teilstützelement eine geringere Dicke als das erste Stützelement aufweist.

12. Elektronische Vorrichtung nach Anspruch 11, wobei sich das erste Teilstützelement auf der ersten Oberfläche und der ersten Seitenfläche der Anzeige befindet,
wobei sich das zweite Teilstützelement auf der ersten Oberfläche und der zweiten Seitenfläche der Anzeige befindet, und
wobei das erste Teilstützelement und das zweite Teilstützelement von der zweiten Oberfläche der Anzeige beabstandet sind.

13. Elektronische Vorrichtung nach Anspruch 10, wobei die Vielzahl von Stützelementen ferner ein zweites Stützelement, das an den Zwischenschichtbereich der Anzeige gekoppelt ist, und ein drittes Stützelement, das an den äußersten Schichtbereich der Anzeige gekoppelt ist, beinhaltet,
wobei das erste Stützelement an den innersten Schichtbereich der Anzeige gekoppelt ist,
wobei das erste Stützelement eine geringere Breite als das zweite Stützelement aufweist, und
wobei das zweite Stützelement eine geringere Breite als das dritte Stützelement aufweist.

14. Elektronische Vorrichtung nach Anspruch 10, wobei die Vielzahl von Stützelementen Stützelemente beinhaltet, die an den innersten Schichtbereich, den Zwischenschichtbereich und den äußersten Schichtbereich der Anzeige gekoppelt sind,
wobei ein Abstand zwischen Stützelementen, die an den Zwischenschichtbereich gekoppelt sind, größer ist als ein Abstand zwischen Stützelementen, die an den innersten Schichtbereich gekoppelt sind, und
wobei ein Abstand zwischen Stützelementen, die an den äußersten Schichtbereich gekoppelt sind, größer ist als der Abstand zwischen den Stützelementen, die an den Zwischenschichtbereich gekoppelt sind.

## Revendications

1. Dispositif électronique (100) comprenant :
un écran souple (120) comprenant une première surface (120a) conçue pour afficher une image et une seconde surface (120b) conçue pour être orientée à l'opposé de la première surface ; et
une pluralité d'éléments de support (150) couplés à l'écran et espacés les uns des autres,
dans lequel la pluralité d'éléments de support comprennent un premier élément de support (150), dans lequel le premier élément de support comprend :
une partie de corps (153) disposée sur la seconde surface de l'écran et conçue pour s'étendre d'une partie d'extrémité à une partie d'extrémité opposée de l'écran ;
une première partie de support latérale (154) conçue pour s'étendre à partir d'une extrémité de la partie de corps et située sur une première surface latérale de l'écran ;
une première partie de couvercle (151) conçue pour s'étendre à partir de la première partie de support latérale et située sur la première surface de l'écran ;
une seconde partie de support latérale (155) conçue pour s'étendre à partir d'une extrémité opposée de la partie de corps et située sur une seconde surface latérale de l'écran ; et
une seconde partie de couvercle (152) conçue pour s'étendre à partir de la seconde partie de support latérale et située sur la première surface de l'écran, et
dans lequel la partie de corps, la première partie de support latérale, la première partie de couvercle, la seconde partie de support latérale et la seconde partie de couvercle sont formées d'un seul tenant ; et
**caractérisé en ce que** le premier élément de support comprend en outre au moins l'un d'un premier élément d'étanchéité (510) situé entre l'écran et la première partie de support latérale (154) et un second élément d'étanchéité (510) situé entre l'écran et la seconde partie de support latérale (155).

2. Dispositif électronique de la revendication 1, dans lequel une surface supérieure de la première partie de couvercle comprend :
une surface plane (151a) située sur une portion centrale de la surface supérieure de la première partie de couvercle ; et
une surface inclinée (151b) conçue pour entourer la surface plane et inclinée par rapport à une direction d'épaisseur de l'écran.

3. Dispositif électronique de la revendication 2, dans lequel la première partie de couvercle comprend une saillie (151c) conçue pour faire saillie dans une direction dans laquelle se trouve l'écran, la saillie étant amenée en contact avec la première surface de l'écran.

4. Dispositif électronique de la revendication 3, comprenant en outre :
un boîtier ; et
un élément de rouleau situé dans le boîtier,
dans lequel l'écran est enroulé autour de l'élément de rouleau de sorte que la première partie de couvercle et la seconde partie de couvercle soient orientées vers l'intérieur et que la partie de corps soit orientée vers l'extérieur.

5. Dispositif électronique de la revendication 1, dans lequel la partie corps comprend au moins une rainure (810).

6. Dispositif électronique de la revendication 1, dans lequel la partie de corps comprend une première région incurvée (1053a) et une deuxième région incurvée (1053b) situées sur des portions d'extrémité opposées de celle-ci et convexes dans une même direction,
dans lequel la première partie de couvercle comprend une troisième région incurvée (1051a) convexe dans une direction, et
dans lequel la seconde partie de couvercle comprend une quatrième région incurvée (1052a) convexe dans une direction.

7. Dispositif électronique de la revendication 6, dans lequel la première région incurvée et la troisième région incurvée se chevauchent l'une l'autre dans une direction d'épaisseur de l'écran, et dans lequel la deuxième région incurvée et la quatrième région incurvée se chevauchent l'une l'autre dans la direction de l'épaisseur de l'écran.

8. Dispositif électronique de la revendication 6, comprenant en outre :
un élément de raccordement (1510), dont une extrémité est raccordée au premier élément de support,
dans lequel la pluralité d'éléments de support comprennent en outre un deuxième élément de support adjacent au premier élément de support, et
dans lequel une extrémité opposée de l'élément de raccordement est raccordée au deuxième élément de support.

9. Dispositif électronique de la revendication 6, comprenant en outre :
un élément de rouleau autour duquel l'écran est enroulé le long d'une surface de périmètre externe, dans lequel l'élément de rouleau comprend une rainure de réception dans laquelle la troisième région incurvée est logée dans un état dans lequel l'écran est enroulé autour de l'élément de rouleau.

10. Dispositif électronique de la revendication 1, comprenant en outre :
un élément de rouleau autour duquel l'écran est enroulé le long d'une surface de périmètre externe, dans lequel, dans un état dans lequel l'écran est enroulé autour de l'élément de rouleau, l'écran comprend :
une zone de couche la plus interne (P11) correspondant à une zone disposée dans une couche la plus interne ;
une zone de couche la plus externe (P13) correspondant à une zone disposée dans une couche la plus externe ; et
une zone de couche intermédiaire (P12) correspondant à une zone entre la zone de couche la plus interne et la zone de couche la plus externe.

11. Dispositif électronique de la revendication 10, dans lequel la pluralité d'éléments de support comprennent en outre :
un premier élément de support partiel couplé à une portion d'extrémité de la zone de couche la plus externe de l'écran ; et
un second élément de support partiel couplé à une portion d'extrémité opposée de la zone de couche la plus externe de l'écran et espacé du premier élément de support partiel,
dans lequel le premier élément de support est couplé à la zone de couche intermédiaire de l'écran, et
dans lequel le premier élément de support partiel a une épaisseur plus petite que le premier élément de support.

12. Dispositif électronique de la revendication 11, dans lequel le premier élément de support partiel est situé sur la première surface et la première surface latérale de l'écran,
dans lequel le second élément de support partiel est situé sur la première surface et la seconde surface latérale de l'écran, et
dans lequel le premier élément de support partiel et le second élément de support partiel sont espacés de la seconde surface de l'écran.

13. Dispositif électronique de la revendication 10, dans lequel la pluralité d'éléments de support comprennent en outre un deuxième élément de support couplé à la zone de couche intermédiaire de l'écran et un troisième élément de support couplé à la zone de couche la plus externe de l'écran,
dans lequel le premier élément de support est couplé à la zone de couche la plus interne de l'écran, dans lequel le premier élément de support a une largeur plus petite que le deuxième élément de support, et
dans lequel le deuxième élément de support a une largeur plus petite que le troisième élément de support.

14. Dispositif électronique de la revendication 10, dans lequel la pluralité d'éléments de support comprennent des éléments de support couplés à la zone de couche la plus interne, à la zone de couche intermédiaire et à la zone de couche la plus externe de l'écran,
dans lequel une distance entre les éléments de support couplés à la zone de couche intermédiaire est supérieure à une distance entre les éléments de support couplés à la zone de couche la plus interne, et
dans lequel une distance entre les éléments de support couplés à la zone de couche la plus externe est supérieure à la distance entre les éléments de support couplés à la zone de couche intermédiaire.
